# FASCICULE DE BREVET EUROPEEN

(11) **EP 3 292 322 B1**
(45) Date de publication et mention de la délivrance du brevet: **03.07.2019**
(21) Numéro de dépôt: 16730875.8
(22) Date de dépôt: 14.04.2016
(51) Int. Cl.: F16H 55/28

(54) **POUSSOIR DE DIRECTION ASSISTÉE AVEC AMORTISSEUR À EMBASE CONIQUE**
DRUCKKNOPF FÜR SERVOLENKUNG MIT STOSSDÄMPFER MIT KONISCHEM SOCKEL
POWER-STEERING PUSH BUTTON HAVING A SHOCK ABSORBER WITH A CONICAL BASE

(30) Priorité: 04.05.2015 FR 1553968
(43) Date de publication de la demande: 14.03.2018
(73) Titulaire: JTEKT Europe, 69540 Irigny (FR)
(72) Inventeur: VIZIER, Pascal, 69005 Lyon (FR)
(74) Mandataire: Chevalier, Renaud Philippe
(86) Numéro de dépôt international: PCT/FR2016/050865
(87) Numéro de publication internationale: WO 2016/177947

(56) Documents cités:
- EP-A1- 2 754 600
- DE-A1-102004 004 390
- DE-C1- 19 501 761

## Description

La présente invention se rapporte au domaine général des mécanismes de rattrapage de jeu employés notamment pour limiter les jeux d'engrènement au sein des modules de direction de véhicules automobiles.

Elle concerne plus particulièrement un dispositif de rattrapage de jeu pour crémaillère, comprenant un poussoir destiné à venir en appui contre le dos d'une crémaillère, notamment d'une crémaillère de direction, afin de presser la denture de ladite crémaillère contre la denture d'un pignon qui entraîne ladite crémaillère.

On connaît déjà des dispositifs comprenant un poussoir qui forme un piston monté mobile en translation dans une chemise, et qui est placé sous la contrainte d'un ressort hélicoïdal qui presse ledit poussoir contre la crémaillère, à l'encontre du pignon.

Afin d'assurer un guidage relativement précis et un fonctionnement peu bruyant du poussoir dans la chemise, on munit généralement ledit poussoir de joints toriques, logés et étagés axialement, tels des segments, dans des gorges annulaires creusées dans la paroi latérale dudit poussoir.

Lesdits joints toriques restent en appui raclant contre la paroi interne de la chemise lors des mouvements axiaux alternés d'avance ou de recul du poussoir, ce qui permet de limiter le débattement radial dudit poussoir.

Si un tel agencement donne généralement satisfaction, il peut cependant souffrir de certaines limitations.

En particulier, lorsque la direction subit un effort important ou bien des vibrations, il peut arriver ponctuellement que le poussoir bascule latéralement au point de venir heurter la chemise, ce qui produit un bruit de choc métallique et peut éventuellement endommager le dispositif de rattrapage de jeu ou en accélérer l'usure.

En outre, le poussoir présentant généralement un diamètre bien supérieur à sa hauteur axiale, un basculement dudit poussoir peut facilement provoquer, par arc-boutement, un coincement du poussoir, et donc plus globalement un blocage du mécanisme de rappel chargé de plaquer la crémaillère contre le pignon, ce qui perturbe le bon fonctionnement du dispositif de rattrapage de jeu.

Afin de limiter ce risque de basculement et de choc entre le poussoir et la chemise, il est certes connu d'exiger un guidage très précis du poussoir, en réduisant considérablement les intervalles de tolérance admissibles pour la réalisation des diamètres respectifs du poussoir et de la chemise.

Toutefois, un tel impératif de qualité complique singulièrement la fabrication des pièces concernées, et augmente le prix de revient du poussoir ainsi que le taux de rebut.

En outre, l'étroitesse du jeu radial de guidage, c'est-à-dire le faible écart dimensionnel entre le diamètre externe du poussoir et le diamètre interne de la chemise, peut compliquer l'insertion initiale dudit poussoir dans ladite chemise, lors de l'assemblage du dispositif de rattrapage de jeu. En particulier, le moindre défaut de centrage ou d'inclinaison du poussoir, lors de l'insertion dudit poussoir, peut alors provoquer une mise en contact accidentelle dudit poussoir avec la paroi de la chemise, et un coincement irréversible dudit poussoir dans la chemise par arc-boutement.

La mise en oeuvre d'une pluralité de joints toriques étagés peut également présenter des inconvénients spécifiques.

Tout d'abord, le poussoir doit être suffisamment long axialement pour pouvoir accueillir l'ensemble desdits joints toriques, ce qui tend à accroître l'encombrement du dispositif.

A ce titre, il est parfois difficile de concilier les impératifs liés à l'encombrement global du dispositif de rattrapage de jeu, qui incitent à réaliser un poussoir qui soit le plus compact possible, et donc le plus court possible, avec les impératifs fonctionnels dudit dispositif de rattrapage de jeu, qui imposent que le poussoir possède une hauteur axiale qui soit suffisante non seulement pour accueillir l'ensemble des joints toriques mais également pour minimiser les risques de coincement du poussoir dans la chemise par arc-boutement.

Ensuite, la mise en oeuvre d'une pluralité de joints toriques augmente également la complexité du dispositif, et par conséquent son coût de fabrication, notamment du fait qu'il est nécessaire de prévoir un usinage spécifique du poussoir, incluant en particulier la réalisation de plusieurs gorges destinées à accueillir lesdits joints, puis de procéder à une succession de plusieurs opérations d'assemblage pour la mise en place desdits joints.

En outre, les joints toriques racleurs, comprimés contre la paroi de la chemise, créent des frottements qui peuvent s'opposer à l'action du ressort hélicoïdal, et ainsi perturber la fonction de rappel du poussoir, voire provoquer un basculement du poussoir et un blocage par arc-boutement.

Par ailleurs, les joints toriques peuvent être sujets à l'usure et au fluage par écrasement au contact de la chemise, ce qui peut occasionner l'apparition d'un jeu radial, et donc une certaine perte progressive du maintien radial du poussoir, ce qui peut être à l'origine, ici encore, de l'apparition de bruits lors du fonctionnement du module de direction.

Le document EP 2 754 600 A1 montre un dispositif connu.

Les objets assignés à l'invention visent par conséquent à remédier aux inconvénients susmentionnés et à proposer un dispositif de rattrapage de jeu pour crémaillère qui présente un fonctionnement silencieux et fiable, tout en étant compact, peu onéreux à fabriquer et d'une relative simplicité.

Les objets assignés à l'invention son atteints au moyen d'un dispositif de rattrapage de jeu pour crémaillère, ledit dispositif comprenant un poussoir destiné à venir exercer un effort de poussée contre une crémaillère, ledit poussoir étant monté mobile et guidé en translation, selon un axe de poussée (ZZ'), dans un boîtier qui est agencé de sorte à former d'une part une butée axiale qui fait obstacle au recul axial du poussoir selon l'axe de poussée (ZZ'), et d'autre part une butée radiale qui fait obstacle à l'éloignement radial du poussoir transversalement à l'axe de poussée (ZZ'), ledit dispositif comprenant également un organe amortisseur élastique, qui est interposé entre le poussoir et le boîtier, en appui respectivement contre une première surface d'appui appartenant au poussoir et une seconde surface d'appui appartenant au boîtier, ledit dispositif étant caractérisé en ce que l'une au moins desdites première et seconde surfaces d'appui, dite « surface de répartition », est inclinée par rapport à l'axe de poussée (ZZ'), et en ce que l'autre desdites première et seconde surfaces d'appui, dite « surface de siège », présente, en vis-à-vis de la surface de répartition et à l'encontre de l'organe amortisseur élastique, au moins une composante d'extension radiale, qui permet à ladite surface de siège d'agir axialement sur l'organe amortisseur, et au moins une composante d'extension axiale, qui permet à ladite surface de siège d'agir radialement sur l'organe amortisseur, de telle sorte que lorsque le poussoir comprime l'organe amortisseur élastique contre le boîtier, l'organe amortisseur élastique exerce en retour sur le poussoir un effort de retenue qui tend à rappeler simultanément ledit poussoir axialement en direction de la crémaillère et transversalement en direction de l'axe de poussée (ZZ').

Avantageusement, l'utilisation d'une surface de répartition inclinée, en particulier tronconique, permet de transmettre à l'organe amortisseur élastique ou, réciproquement, de recevoir de ce dernier, un effort, ici un effort de retenue, qui comprend simultanément une composante axiale (sensiblement parallèle à l'axe de poussée (ZZ')) et une composante radiale (sensiblement perpendiculaire à la composante axiale, et plus particulièrement sensiblement perpendiculaire à l'axe de poussée (ZZ')).

Avantageusement, la répartition des intensités respectives desdites composantes axiale et radiale dépend notamment de la valeur choisie pour l'angle d'inclinaison de ladite surface de répartition par rapport à l'axe de poussée (ZZ').

Avantageusement, l'invention combine cette surface de répartition inclinée avec une surface de siège qui est agencée de manière à former une butée à l'encontre de l'organe amortisseur élastique, aussi bien radialement qu'axialement, c'est-à-dire avec une surface de siège qui est capable de prendre en charge aussi bien axialement que radialement les efforts que la surface de répartition exerce sur l'organe amortisseur et qui sont ensuite transmis à ladite surface de siège, par l'intermédiaire dudit organe amortisseur.

Ainsi, l'agencement proposé par l'invention permet, au moyen d'une seule et même surface de répartition inclinée venant en prise sur un seul et même organe amortisseur élastique, de générer et de transmettre, depuis le boîtier vers le poussoir, un effort de retenue qui comprend aussi bien une composante axiale significative, générée par la compression élastique axiale de l'organe amortisseur, et qui s'oppose à l'enfoncement axial du poussoir, qu'une composante radiale significative, générée par la compression élastique radiale de l'organe amortisseur, et qui s'oppose au déport latéral du poussoir par rapport à l'axe de poussée (ZZ'), de telle sorte que ledit effort de retenue s'oppose effectivement et efficacement aux différents mouvements de déviation et de basculement du poussoir.

Avantageusement, l'interface comprenant la surface de répartition inclinée, l'organe amortisseur, et la surface de siège, crée, du fait même de son agencement, un ressort de rappel bidirectionnel qui présente une double raideur, à savoir aussi bien une raideur radiale, qui tend à recentrer le poussoir sur son axe de poussée (ZZ'), qu'une raideur axiale, qui tend à rappeler ledit poussoir vers la crémaillère.

Grâce à l'action de rattrapage bidirectionnelle de l'organe amortisseur élastique, action qui est efficacement relayée par les surfaces d'appui du fait de l'orientation de ces dernières, l'invention permet de réduire efficacement le phénomène de basculement latéral du poussoir dans le boîtier.

On notera que, convenablement combiné aux surfaces d'appui de forme et d'orientation appropriée, un seul organe amortisseur élastique, le cas échéant de forme très simple, et plus particulièrement un seul joint torique, peut alors suffire pour remplir le rôle d'équilibrage, de centrage et de guidage du poussoir qui était jusqu'ici dévolu à un ensemble de plusieurs joints toriques étagés axialement le long du poussoir.

En concentrant au sein d'un espace réduit la fonction d'amortissement élastique axial et la fonction d'amortissement élastique radial, et en utilisant peu de pièces pour obtenir ces fonctions d'amortissement élastique, le dispositif de rattrapage de jeu de l'invention permet avantageusement de gagner en simplicité et en compacité, et de réduire les coûts de fabrication.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective éclatée de dessus, un dispositif de rattrapage de jeu selon l'invention, avec deux variantes possibles de poussoir.
La figure 2 illustre, selon une vue en perspective éclatée de dessous, le dispositif de rattrapage de jeu de la figure 1, avec les deux variantes de poussoir.
La figure 3 illustre, selon une vue en coupe dans un plan normal à l'axe longitudinal (YY') de la crémaillère, correspondant ici à un plan de symétrie du poussoir contenant l'axe de poussée (ZZ'), un mécanisme de direction pourvu d'un dispositif de rattrapage de jeu selon la figure 1 ou 2.
La figure 4 illustre, selon une vue de détail en coupe, la jonction élastique procurée par l'organe amortisseur entre la surface de répartition et la surface de siège d'un dispositif de rattrapage de jeu de la figure 3.
La figure 5 illustre, de façon schématique, l'effet d'amortissement bidirectionnel obtenu à l'encontre du poussoir au sein d'un dispositif de rattrapage de jeu selon l'invention, en particulier au sein du dispositif de la figure 4.
La figure 6 illustre, selon une vue en coupe dans un plan normal à l'axe longitudinal (YY') de la crémaillère et contenant l'axe de poussée (ZZ'), l'effet d'auto-équilibrage anti-basculement du poussoir obtenu du fait que l'organe amortisseur est placé en débord radial de la ligne d'action selon laquelle la crémaillère appuie sur le poussoir, au sein d'un dispositif selon l'invention, tel que le dispositif des figures 1 à 4.
La figure 7 illustre, selon une vue en coupe dans un plan normal à l'axe longitudinal (YY') de la crémaillère et contenant l'axe de poussée (ZZ'), le phénomène de basculement latéral du poussoir que permet d'éviter l'agencement du dispositif selon l'invention.
La figure 8 illustre, selon une vue en coupe dans un plan normal à l'axe de poussée (ZZ'), le guidage de la portion de pied du poussoir dans un alésage de guidage creusé dans la culasse du dispositif de la figure 3.
La figure 9 illustre, selon une vue partielle, le détail de la définition du jeu radial fonctionnel entre une nervure de guidage de la portion de pied du poussoir et l'alésage de la culasse.
Les figures 10, 11 et 12 illustrent, selon des vues en projection respectivement de dessous, de côté et de dessus, le poussoir du dispositif des figures 1 à 4.
La figure 13 illustre une vue en coupe du poussoir des figures 10 à 12, dans un plan contenant l'axe de poussée (ZZ') et correspondant à un plan de symétrie dudit poussoir normal à l'axe de la crémaillère (YY').
La figure 14 représente dans un plan perpendiculaire à l'axe de poussée (ZZ'), la section droite de la portion de pied du poussoir des figures 10 à 13.
La figure 15 illustre, selon une vue partielle du poussoir de la figure 13, le détail d'une surface de répartition inclinée qui se prolonge par une gorge de dégagement destinée à accueillir la matière constitutive de l'organe amortisseur lorsque ladite matière est chassée par compression sous la contrainte du poussoir et de la crémaillère.
La figure 16 illustre, selon une vue partielle en coupe longitudinale, dans un plan contenant l'axe de poussée (ZZ'), une variante d'agencement de l'invention dans laquelle la surface de répartition et la surface de siège sont toutes deux tronconiques.
La figure 17 illustre, selon une vue partielle en coupe longitudinale, dans un plan contenant l'axe de poussée (ZZ'), une variante d'agencement de l'invention dans laquelle le poussoir porte une surface de répartition tronconique, et le boîtier porte une surface de siège formant un épaulement, comme cela est le cas pour les figures 1 à 4.
La figure 18 illustre, selon une vue partielle en coupe longitudinale, dans un plan contenant l'axe de poussée (ZZ'), une variante d'agencement de l'invention dans laquelle c'est le boîtier qui comprend une surface de répartition inclinée, ici tronconique, tandis que la surface de siège forme un épaulement au sein du poussoir.
La figure 19 illustre, selon une vue partielle en coupe longitudinale, dans un plan contenant l'axe de poussée (ZZ'), une variante d'agencement de l'invention dans laquelle le poussoir porte une surface de répartition tronconique, et le boîtier porte une surface de siège formée par une rainure annulaire qui débouche sur une surface du boîtier qui est sensiblement perpendiculaire à l'axe de poussée (ZZ') et située axialement en vis-à-vis du poussoir.

L'invention concerne un dispositif 1 de rattrapage de jeu pour crémaillère 2.

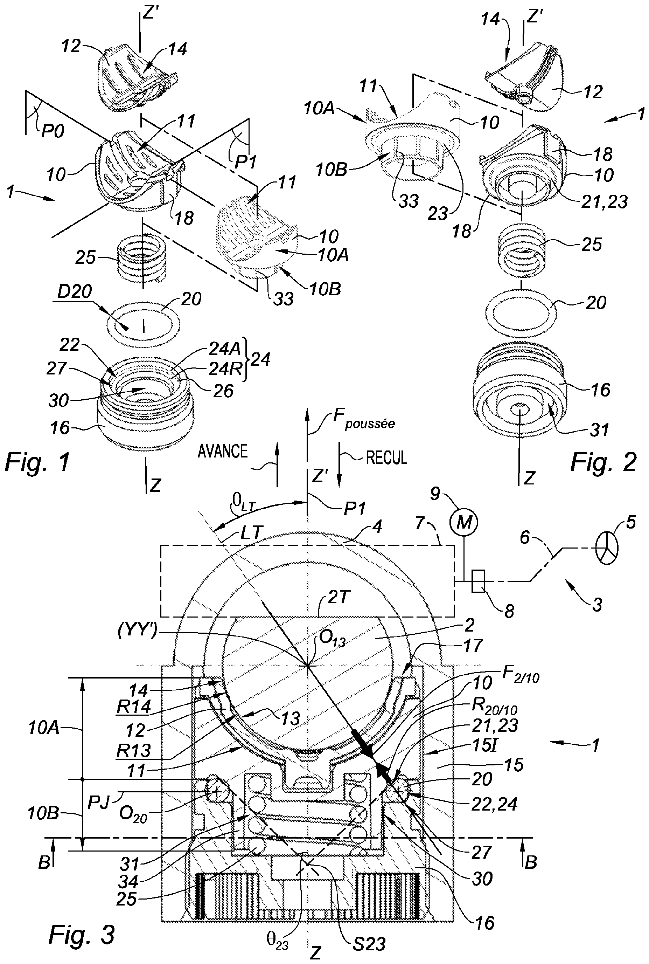

De préférence, tel que cela est illustré sur la figure 3, ladite crémaillère 2 fait partie d'un mécanisme de direction 3, et plus particulièrement d'un mécanisme de direction assistée, qui équipe un véhicule, tel qu'un véhicule automobile.

La crémaillère 2 est avantageusement montée mobile et guidée en translation, selon son axe longitudinal (YY'), dans un carter de direction 4 qui est lui-même fixé au châssis du véhicule.

De préférence, l'axe longitudinal (YY') de la crémaillère 2, que l'on assimilera dans ce qui suit à l'axe de translation (ou « axe de coulissement ») de ladite crémaillère 2, est orienté selon la direction latérale transverse (gauche-droite) du véhicule.

Le mécanisme de direction 3 comprend en outre, de façon connue en soi, et tel que cela est schématisé sur la figure 3, un volant de conduite 5 porté par une colonne de direction 6 et qui permet au conducteur du véhicule de manoeuvrer la direction.

La colonne de direction 6 engrène de préférence sur la crémaillère 2 au moyen d'un pignon d'entraînement 7 (schématisé en trait pointillé sur la figure 3).

La colonne de direction 6 comportera par ailleurs de préférence un capteur de couple 8 destiné à mesure le couple exercé par le conducteur sur le volant de conduite 5.

Ledit capteur de couple 8 pourra par exemple être formé par un capteur magnétique mesurant la déformation élastique d'une barre de torsion interposée entre la partie amont de la colonne de direction 6 portant le volant de conduite 5 et la partie aval de ladite colonne de direction 6 portant le pignon d'entraînement 7 qui engrène sur la crémaillère 2.

La crémaillère 2 est par ailleurs reliée, de préférence à chacune de ses extrémités (gauche et droite, en référence au repère attaché au véhicule), à une biellette de direction, ici respectivement une biellette gauche et une biellette droite, biellette qui est elle-même raccordée à un porte-fusée portant une roue directrice (et de préférence motrice) du véhicule, ici respectivement une roue gauche et une roue droite.

Ainsi, le déplacement de la crémaillère 2 (ici en translation, selon l'axe (YY'), par rapport au carter de direction 4) permet de modifier l'angle de braquage (l'orientation en lacet) desdites roues directrices.

Le mécanisme de direction comprend par ailleurs de préférence un moteur d'assistance 9, par exemple hydraulique ou bien électrique, agencé pour exercer sur la crémaillère 2, selon des lois d'assistance prédéfinies, un couple d'assistance qui permet d'assister la manoeuvre du mécanisme de direction.

Le moteur d'assistance 9 pourra par exemple venir en prise sur la colonne de direction 6 elle-même, tel que cela est schématisé sur la figure 3, de préférence au moyen d'un réducteur, tel qu'un réducteur à roue tangente et vis sans fin, pour former ainsi un mécanisme dit « à simple pignon ».

Selon une autre possibilité de réalisation, le moteur d'assistance 9 pourra venir en prise directement sur la crémaillère 2, le cas échéant par l'intermédiaire d'un réducteur, pour former un mécanisme dit « à double pignon », au moyen par exemple d'une vis à billes engagée sur la crémaillère 2 ou encore d'un second pignon d'entraînement engrenant sur la crémaillère 2 et distinct du premier pignon d'entraînement 7 porté par la colonne de direction 6.

Quel que soit l'agencement et le nombre de pignons d'entraînement 7 venant en prise sur la crémaillère 2, le dispositif conforme à l'invention vise à contraindre la denture 2T de la crémaillère 2 à l'encontre de la denture dudit pignon 7 ou de l'un au moins desdits pignons 7, afin de rattraper les jeux d'engrènement liés aux tolérances de fabrication, à l'usure du mécanisme, ou bien aux chocs et vibrations qui sont subis par le train roulant et transmis à la crémaillère 2.

A cet effet, tel que cela est illustré sur la figure 3, ledit dispositif 1 comprend un poussoir 10 destiné à venir exercer un effort de poussée F_{poussée} contre la crémaillère 2.

Plus particulièrement, le poussoir 10 est agencé de manière à ce que l'effort de poussée F_{poussée} tende à plaquer la crémaillère 2 contre le pignon d'entraînement 7.

A cet effet, le poussoir 10 vient en appui (de préférence directement) contre la crémaillère 2, au dos de cette dernière, diamétralement à l'opposé de la denture 2T de ladite crémaillère sur laquelle engrène le pignon 7.

Préférentiellement, le poussoir 10 comprend un berceau 11 agencé pour accueillir et soutenir la crémaillère 2.

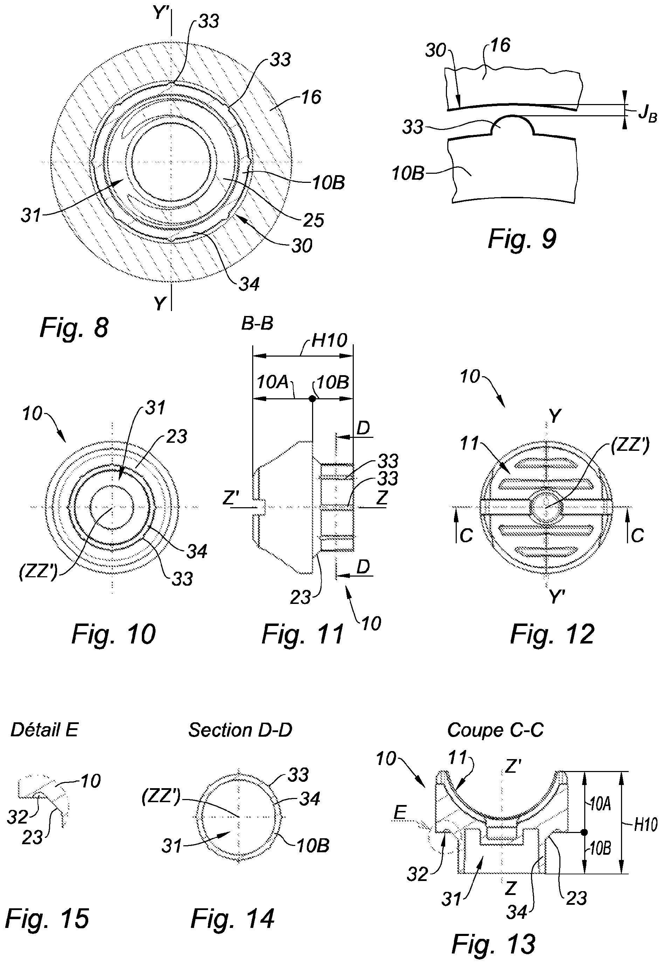

Tel que cela est illustré sur les figures 1 à 3 et 13, ledit berceau 11 présente de préférence une forme sensiblement cylindrique dont l'axe générateur est parallèle à, et même sensiblement confondu avec, l'axe de coulissement (YY') de la crémaillère 2.

En outre, le berceau 11 est de préférence garni d'un revêtement ou d'un patin 12, par exemple en matériau polymère, qui favorise le glissement de la crémaillère 2 dans ledit berceau 11.

Le matériau polymère utilisé à cet effet pourra notamment être un polyamide, du genre PA46 ou PA66, éventuellement renforcé de fibres, par exemple de fibres de carbone, ou bien encore un PTFE, un silicone ou un POM.

En variante, le patin 12 pourra être formé par une feuille métallique recouverte d'une couche de PTFE et de résine.

Le patin 12, et donc plus globalement le poussoir 10, offre ainsi une surface (apparente) de réception 14 sur laquelle vient en appui glissant une surface de glissement 13 appartenant à la crémaillère 2, ladite surface de glissement 13 étant ici formée par le dos lisse de la crémaillère, situé diamétralement à l'opposé de la denture 2T.

Avantageusement, les formes et les dimensions du patin 12 permettront de définir la position et l'étendue des lignes et/ou des surfaces de contact par lesquelles la surface de glissement 13 de la crémaillère 2 s'appuie sur la surface de réception 14 du patin 12, et par conséquent la conformation des structures de guidage qui guident le déplacement de la crémaillère 2 sur le patin 12 (et plus globalement sur le poussoir 10).

En particulier, on pourra prévoir que la surface de glissement 13 de la crémaillère 2 présente un profil sensiblement en arc de cercle, dont le rayon R13 sera strictement inférieur au rayon R14 de la surface de réception 14 correspondante, également de forme sensiblement en arc de cercle.

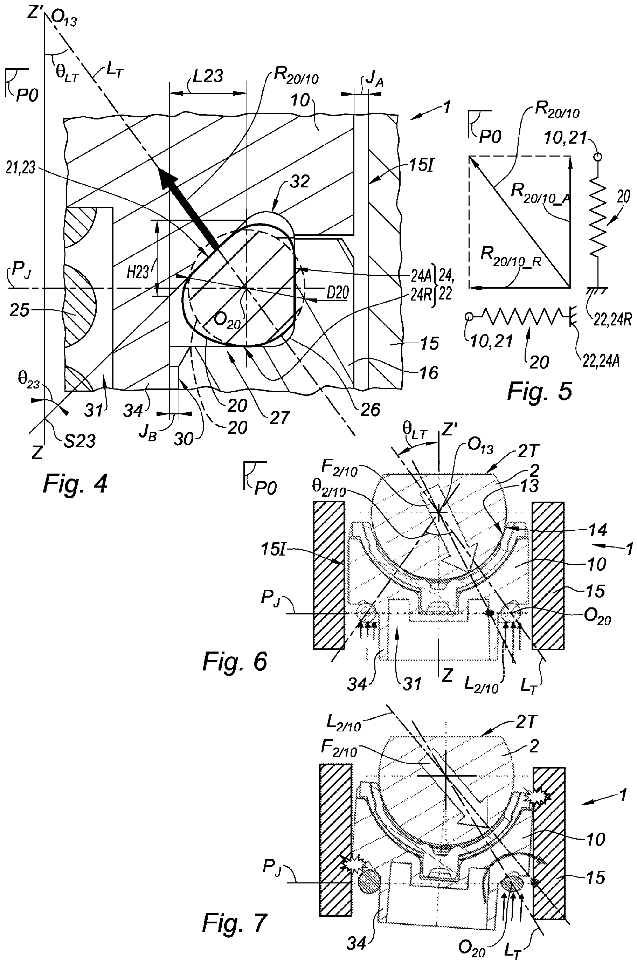

Avantageusement, en définissant convenablement l'agencement mutuel de la surface de glissement 13 et de la surface de réception 14, on pourra prédéterminer sensiblement, par rapport à l'axe de translation (YY'), le secteur angulaire dit « secteur angulaire d'action » θ_{2/10}, dans lequel se situera (et sera confinée) la « ligne de force » L_{2/10} selon laquelle la crémaillère 2 viendra exercer son action F_{2/10} sur le poussoir 10, tel que cela est par exemple illustré sur la figure 6, ce qui permettra ainsi adapter le système d'amortissement, pour éviter tout basculement latéral du poussoir 10, quelle que soit la situation de vie du véhicule.

On notera par ailleurs que, selon les sollicitations subies par le train roulant, et donc par la crémaillère 2 et par le pignon 7, l'action F_{2/10} de la crémaillère 2 sur le poussoir 10 pourra être sensiblement centrée, c'est-à-dire portée par l'axe de poussée (ZZ'), ou bien au contraire être dirigée en oblique par rapport audit axe de poussée (ZZ'), tel que cela est représenté, de façon purement illustrative, sur la figure 6, tout en restant en principe à l'intérieur du secteur angulaire d'action θ_{2/10} susmentionné.

Le poussoir 10 pourra être réalisé, de préférence d'un seul tenant, dans un matériau métallique, tel qu'un alliage d'aluminium moulé ou un acier fritté, ou bien encore dans un matériau polymère, suffisamment rigide, éventuellement renforcé de fibres, de préférence un polymère thermoplastique permettant un moulage par injection, tel que du PA46 (polyamide) ou du PPA (polyphtalamide), éventuellement renforcé de fibres de verre ou de carbone.

Selon l'invention, le poussoir 10 est monté mobile et guidé en translation, selon un axe de poussée (ZZ'), dans un boîtier 15, 16.

Ledit boîtier 15, 16 est agencé de sorte à former d'une part une butée axiale qui fait obstacle au recul axial du poussoir 10 selon l'axe de poussée (ZZ'), c'est-à-dire qui fait obstacle au mouvement axial selon lequel le poussoir s'enfonce dans le boîtier 15, 16, sous l'action F_{2/10} de compression qu'exerce la crémaillère 2 sur ledit poussoir 10, en éloignement par rapport au pignon 7, et d'autre part une butée radiale qui fait obstacle à l'éloignement radial du poussoir transversalement à l'axe de poussée (ZZ'), c'est-à-dire qui s'oppose au débattement latéral, également induit par l'action F_{2/10} de la crémaillère 2 sur le poussoir 10, et selon lequel le poussoir 10 tend à s'éloigner (par excentration et/ou basculement) de l'axe de poussée (ZZ').

Tel que cela est visible notamment sur la figure 3, l'axe de poussée (ZZ') est sécant, et de préférence sensiblement perpendiculaire, à l'axe longitudinal (YY') de la crémaillère (c'est-à-dire à l'axe de coulissement de la crémaillère).

Par ailleurs, le poussoir 10 présentera de préférence sensiblement une forme, ou au moins une enveloppe, cylindrique, le cas échéant une forme cylindrique de révolution, dont l'axe générateur (axe central) sera sensiblement confondu, en fonctionnement normal, avec l'axe de poussée (ZZ'), auquel ledit axe générateur pourra donc être assimilé par commodité.

Par convention et par commodité de description, et sauf mention contraire, on désignera par « axiale » une direction ou une dimension considérée parallèlement à l'axe considéré, ou confondue avec l'axe considéré, et plus particulièrement une direction parallèle à ou confondue avec l'axe de poussée (ZZ').

De même, on désignera par « radiale » une direction ou une dimension considéré transversalement à l'axe considéré, et plus particulièrement perpendiculairement à l'axe considéré, et notamment une direction sensiblement perpendiculaire à l'axe de poussée (ZZ').

Tel que cela est illustré sur la figure 3, le boîtier 15, 16 comprend une chemise 15 qui s'étend sensiblement selon l'axe de poussée (ZZ') depuis une ouverture d'accès 17 débouchant sur la crémaillère 2.

Le poussoir 10 coulisse axialement au sein de ladite chemise 15.

Le boîtier 15, 16 comprend également une culasse 16 qui est rapportée et fixée (par exemple par vissage) sur ladite chemise 15 de manière à obturer ladite chemise 15 à l'opposé de l'ouverture d'accès 17.

De préférence, quel que soit par ailleurs l'agencement du dispositif 1, la culasse 16 est formée dans un matériau polymère (rigide), préférentiellement d'un seul tenant.

Le matériau polymère sera choisi suffisamment rigide, éventuellement renforcé de fibres, et de préférence parmi les thermoplastiques pouvant être moulés par injection. A titre indicatif, on pourra notamment utiliser du PA46 (polyamide) ou du PPA (polyphtalamide), éventuellement renforcé de fibres de verre ou de carbone.

Avantageusement, la mise en oeuvre d'une culasse 16 en polymère permettra d'alléger le dispositif 1, de simplifier la fabrication de la culasse 16, et contribuera à éviter l'apparition de bruits « métalliques » liés aux vibrations et aux chocs éventuels entre pièces au sein dudit dispositif 1.

Ceci étant, on peut également envisager, en variante, une culasse 16 formée dans un matériau métallique.

La chemise 15 présentera quant à elle de préférence une forme sensiblement conjuguée à celle du poussoir 10, préférentiellement une forme cylindrique de base sensiblement circulaire, centrée sur l'axe de poussée (ZZ').

Selon une possibilité de réalisation, la chemise 15 (c'est-à-dire la portion du boîtier 15, 16 correspondant à la chemise 15), peut avantageusement être venue de matière avec tout ou partie du carter de direction 4 qui supporte et guide la crémaillère 2.

Selon une autre possibilité de réalisation, la chemise 15, et plus globalement le boîtier 15, 16 dans son ensemble, pourra former un sous-ensemble distinct du carter de direction 4, et qui sera rapporté(e) et fixé(e) sur ledit carter de direction 4.

Quel que soit son agencement, la chemise 15 pourra avantageusement être réalisée dans un matériau métallique, tel qu'un alliage d'aluminium.

Par ailleurs, selon une possibilité d'agencement, qui est illustrée dans l'alignement de l'axe d'éclatement sur les vues éclatées des figures 1 et 2, le poussoir 10 pourra comporter, en saillie sur sa surface latérale, des ergots 18 destinés à coopérer avec des rainures axiales conjuguées, creusées dans la paroi interne 15I de la chemise 15, afin de repérer la position angulaire du poussoir 10 et de bloquer la rotation dudit poussoir autour de l'axe de poussée (ZZ'). Un tel agencement peut également contribuer à simplifier le montage du poussoir 10 dans la chemise 15.

Toutefois, selon une variante préférentielle de réalisation, le poussoir 10 sera dépourvu d'ergots 18 et présentera ainsi, ici dans sa portion supérieure, dite « portion de tête 10A », en vis-à-vis direct de la chemise 15, une surface latérale externe circulaire et lisse, de rayon constant sur tout son pourtour autour de l'axe de poussée (ZZ'), tel que cela est représenté en déport latéral de l'axe d'éclatement sur les figures 1 et 2.

Selon l'invention, le dispositif de rattrapage de jeu 1 comprend également un organe amortisseur 20 élastique, qui est interposé entre le poussoir 10 et le boîtier 15, 16, en appui respectivement contre une première surface d'appui 21 appartenant au poussoir 10 et une seconde surface d'appui 22 appartenant au boîtier 15, 16.

De préférence, l'organe amortisseur élastique 20 est formé par un anneau en élastomère, notamment pour en minimiser le coût.

Ledit anneau en élastomère pourra prendre des formes différentes sans sortir du cadre de l'invention, par exemple une forme sensiblement conjuguée à l'une et/ou l'autre des première et seconde surfaces d'appui 21, 22.

Selon une possibilité de réalisation (non représentée), l'organe amortisseur élastique 20 pourra être formé par un joint plat tronconique, c'est-à-dire généré par révolution, autour de l'axe de poussée (ZZ'), d'une section sensiblement rectangulaire, d'épaisseur sensiblement constante, et inclinée par rapport à l'axe de poussée (ZZ').

Un tel joint tronconique sera notamment particulièrement indiqué lorsque l'une et/ou l'autre des première et seconde surfaces d'appui 21, 22 est elle-même tronconique, de sorte que le joint tronconique viendra épouser à plat, par sa face radialement interne et/ou, le cas échéant, par sa face radialement externe, ladite première surface d'appui 21, respectivement ladite seconde surface d'appui 22.

Un tel agencement permettra notamment un auto-centrage du joint tronconique par rapport à la première, respectivement la seconde, surface d'appui 21, 22, et procurera un appui particulièrement stable dudit joint tronconique sur ladite, ou lesdites surfaces d'appui 21, 22.

Le joint tronconique plat pourra être fabriqué par moulage.

Toutefois, selon une variante de réalisation particulièrement préférée, l'organe amortisseur élastique 20 est formé par un anneau en élastomère de section droite circulaire, et plus particulièrement par un joint torique, comme cela est notamment illustré sur les figures 1 à 7.

On pourra donc, par simple commodité de description, assimiler l'organe amortisseur 20 à un joint torique 20 dans ce qui suit, étant entendu que la description est généralisable et transposable, *mutatis mutandis,* à d'autres formes d'organes amortisseurs 20.

Avantageusement, un tel joint torique 20 est particulièrement bon marché et simple à mettre en oeuvre.

A titre d'exemple, et quelle que soit sa forme (torique, tronconique plat, etc.), l'organe amortisseur 20 pourra être réalisé en polyuréthane, en silicone, en caoutchouc, et notamment en caoutchouc NBR ou HNBR.

L'élastomère constitutif de l'organe amortisseur 20 présentera par ailleurs de préférence une dureté Shore A comprise entre 60 et 100.

En outre, ledit organe amortisseur 20 sera de préférence centré sur l'axe de poussée (ZZ'), de manière coaxiale avec le poussoir 10, la culasse 16 et la chemise 15. L'action de l'organe amortisseur 20 sera ainsi multidirectionnelle, bien répartie et équilibrée autour de l'axe de poussée (ZZ').

Le périmètre intérieur de l'organe amortisseur 20 épousera avantageusement la première surface d'appui 21, de telle sorte que l'organe amortisseur 20 (et plus particulièrement le joint torique) entoure le poussoir 10 (à 360 degrés), tel que cela est illustré sur la figure 4, tandis que le périmètre extérieur dudit organe amortisseur 20 épouse la seconde surface d'appui 22.

On notera à ce propos que, sur la figure 4, le joint torique 20 est représenté en trait pointillé tel qu'il se trouve lorsqu'il est libre de contrainte, avant déformation, et en trait plein tel qu'il se trouve écrasé et contenu entre les surfaces d'appui 21, 22, une fois que ledit joint torique 20 a été monté au sein du dispositif 1 et qu'il se trouve pris en sandwich entre le poussoir 10 et le boîtier 15, 16.

On notera par ailleurs que le dispositif 1 de rattrapage de jeu comprend de préférence un organe de rappel primaire 25, tel qu'un ressort hélicoïdal, qui est distinct de l'organe amortisseur 20 et qui contraint axialement le poussoir 10 à l'encontre de la crémaillère 2, de manière à rappeler la crémaillère 2 contre le pignon 7.

A cet effet, ledit organe de rappel primaire 25 sera de préférence interposé axialement entre le poussoir 10 et la culasse 16, et précontraint axialement en compression, de sorte à soutenir le poussoir 10, et par conséquent la crémaillère 2, selon un effort de rappel qui augmente lorsque le poussoir s'enfonce (recule axialement) vers la culasse 16.

L'action dudit organe de rappel primaire 25 sera de préférence principalement, voire exclusivement axiale.

L'intensité de l'effort de rappel exercé spécifiquement par l'organe de rappel primaire 25 augmentera de préférence de manière sensiblement proportionnelle avec le recul du poussoir (du fait que la raideur du ressort hélicoïdal 25 est sensiblement constante sur la plage de déformation concernée).

Axialement, l'organe amortisseur 20 formera quant à lui de préférence un organe de rappel secondaire, supplémentaire, qui aura une action axiale auxiliaire venant compléter l'action de rappel exercée par l'organe de rappel primaire 25.

En particulier, l'ajout de l'organe amortisseur 20 en sus de l'organe de rappel primaire 25 permettra d'obtenir, par la compression axiale dudit organe amortisseur 20, une raideur axiale croissante, qui augmentera, de préférence de façon non linéaire, au fur et à mesure du recul du poussoir 10.

Ainsi, plus le poussoir 10 reculera, plus l'action combinée des organes de rappel primaire 25 et secondaire 20 sera « dure », si bien que l'intensité de l'action de rappel axiale cumulée de l'organe de rappel primaire 25 et de l'organe de rappel secondaire 20, c'est-à-dire l'intensité de la composante axiale de l'effort de poussée F_{poussée}, augmentera au fur et à mesure du recul du poussoir 10, de façon non pas proportionnelle (linéaire), mais de façon « sur-proportionnelle », c'est-à-dire en suivant une fonction non linéaire, dont la pente croît avec le recul du poussoir 10.

A titre indicatif, la raideur axiale du système combinant l'organe de rappel primaire 25 et l'organe amortisseur 20 pourra être de l'ordre de 700 N/mm à 1000 N/mm.

La composante axiale de l'effort de poussée F_{poussée} ainsi renvoyé sur la crémaillère pourra de la sorte atteindre environ 300 N.

En revanche, le blocage latéral du poussoir 10 sera de préférence entièrement dévolu à l'organe amortisseur 20.

L'organe amortisseur 20 sera à cet effet interposé radialement entre le poussoir 10 et le boîtier 15, 16, de manière à pouvoir exercer (en sus de l'action axiale) une action de rappel radiale sur le poussoir 10.

On notera à ce titre que l'organe amortisseur 20 sera ainsi de préférence interposé à la fois axialement et radialement entre le poussoir 10 et le boîtier 15, 16, contrairement à l'organe de rappel principal 25 qui est de préférence interposé seulement axialement, mais pas radialement, entre le poussoir 10 et le boîtier 15, 16.

Plus globalement, l'organe amortisseur 20 formera de préférence l'unique élément antichoc (en élastomère) du dispositif 1 de rattrapage de jeu, c'est-à-dire le seul élément antichoc qui sera interposé radialement entre le poussoir 10 et le boîtier 15, 16 et qui sera élastiquement compressible radialement, de telle manière que ledit élément antichoc pourra bloquer les déplacements radiaux du poussoir 10 par rapport au boîtier 15, 16, en amortissant élastiquement lesdits déplacements radiaux (par compression radiale), et pourra donc empêcher le poussoir 10 (et plus particulièrement la paroi latérale dudit poussoir) de venir heurter latéralement le boîtier 15, 16.

Selon l'invention, l'une au moins des première surface d'appui 21 et seconde surface d'appui 22, dite « surface de répartition » 23, est inclinée par rapport à l'axe de poussée (ZZ').

En outre l'autre desdites première et seconde surfaces d'appui 21, 22, dite « surface de siège » 24, présente, en vis-à-vis de la surface de répartition 23 et à l'encontre de l'organe amortisseur élastique 20, au moins une composante d'extension radiale 24R, qui permet à ladite surface de siège 24 d'agir axialement sur l'organe amortisseur 20, et au moins une composante d'extension axiale 24A, qui permet à ladite surface de siège d'agir radialement sur l'organe amortisseur 20.

De la sorte, lorsque le poussoir 10 comprime l'organe amortisseur 20 élastique contre le boîtier 15, 16, l'organe amortisseur 20 élastique exerce en retour sur le poussoir 10 un effort de retenue R_{20/10} qui tend à rappeler ledit poussoir 10 simultanément axialement, en direction de la crémaillère 2, d'une part et transversalement (radialement), en direction de l'axe de poussée (ZZ'), d'autre part, tel que cela est notamment illustré sur les figures 3 à 5.

On notera que l'agencement proposé pour la surface de répartition 23 et/ou pour la surface de siège 24, et notamment l'inclinaison de la surface de répartition 23, est observable au moins dans un plan P0 dit « plan frontal » qui est normal à l'axe longitudinal (YY') de la crémaillère 2 et qui contient l'axe de poussée (ZZ').

Ledit plan frontal P0 correspond par ailleurs de préférence à un (premier) plan de symétrie du poussoir 10, qui divise ledit poussoir en deux moitiés sensiblement identiques.

De préférence, l'agencement proposé pour la surface de répartition 23 et/ou pour la surface de siège 24, et notamment l'inclinaison de la surface de répartition 23, est également observable dans plusieurs autres directions considérées en azimut (en lacet) autour de l'axe de poussée (ZZ'), et plus préférentiellement sur la majorité des directions azimutales, c'est-à-dire que l'organe amortisseur 20 et les surfaces d'appui 21, 22 occupent un secteur angulaire cumulé de plus de 180 degrés, voire de plus de 270 degrés, autour de l'axe de poussée (ZZ').

De façon particulièrement préférentielle, un tel agencement est même observable sur la totalité des directions azimutales (par exemple dans le cas d'un joint torique mentionné plus haut), l'organe amortisseur 20 et les surfaces d'appui 21, 22 s'étendant alors sur 360 degrés autour dudit axe de poussée (ZZ').

On peut ainsi répartir et équilibrer efficacement l'effort de retenue R_{20/10}, quelle que soit l'action F_{2/10} de la crémaillère 2 sur le poussoir 10.

Par ailleurs, quelle que soit leur étendue azimutale, l'organe amortisseur 20 et les surfaces d'appui 21, 22 présentent de préférence une symétrie par rapport au plan dit « plan sagittal » P1 de la crémaillère, qui contient l'axe longitudinal (YY') de la crémaillère 2 et l'axe de poussée (ZZ'), et qui est donc perpendiculaire au plan frontal P0.

Plus particulièrement, l'organe amortisseur 20 et les surfaces d'appui 21, 22 pourront présenter une symétrie de révolution par rapport à l'axe de poussée (ZZ').

Un agencement symétrique, de part et d'autre du plan sagittal P1, permet notamment d'obtenir un comportement de rappel symétrique du poussoir 10 par l'organe amortisseur 20, de telle sorte que ledit organe amortisseur 20 tend à recentrer le poussoir 10 vers l'axe de poussée (ZZ'), quelle que soit la direction dans laquelle le poussoir 10 tend à s'écarter de l'axe de poussée (ZZ') sous l'action de la crémaillère 2.

Ainsi, à titre d'exemple, lorsque le poussoir 10 est dévié vers la droite par l'action de la crémaillère, tel que cela est illustré sur les figures 3 et 6, l'organe amortisseur 20 rappelle ledit poussoir 10 vers la gauche, et inversement.

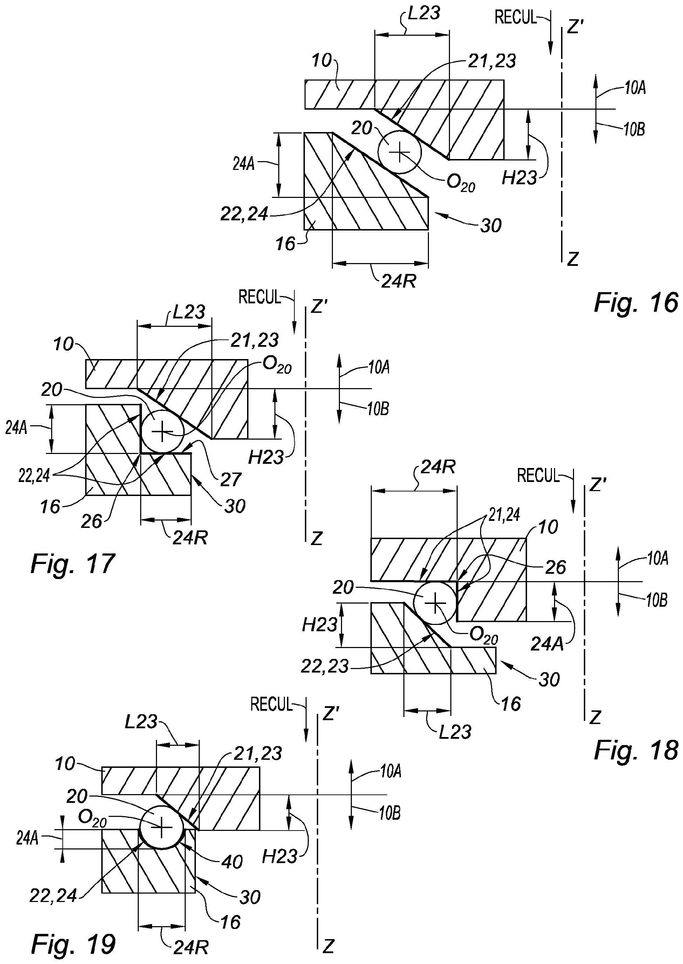

Par ailleurs, selon une configuration possible c'est la première surface d'appui 21 qui pourra former la surface de siège 24, c'est-à-dire que la surface de siège 24 fera partie du poussoir 10, tandis que la seconde surface d'appui 22, appartenant au boîtier, et plus particulièrement à la culasse 16, formera la surface de répartition 23 inclinée, tel que cela est illustré sur la figure 18.

Toutefois, selon une configuration préférentielle, inversée par rapport à la précédente, et qui correspond notamment à celle des figures 3, 4, 16, 17 et 19 la première surface d'appui 21 qui appartient au poussoir 10 forme la surface de répartition inclinée 23, tandis que la seconde surface d'appui 22 qui appartient au boîtier 15, 16 forme la surface de siège 24.

En d'autres termes, la surface de répartition 23 est de préférence réalisée sur le poussoir 10, tandis que la surface de siège 24 est réalisée sur boîtier 15, 16, et plus préférentiellement, au moins en partie, voire en totalité, sur la culasse 16.

Une telle configuration peut notamment faciliter la fabrication du poussoir 10 et de la culasse 16, puis l'assemblage de ces éléments avec l'organe amortisseur 20.

Dans ce qui suit, on pourra donc assimiler par simple commodité de description, et sauf indication contraire, la surface de répartition 23 à la première surface d'appui 21 appartenant au poussoir 10, et la surface de siège 24 à la seconde surface d'appui 22 appartenant au boîtier 15, 16, sans que cela ne constitue toutefois une restriction de l'invention, puisque ladite invention s'applique tout aussi bien à toute configuration inverse, dont les caractéristiques se déduiraient *mutatis mutandis.*

Les figures 16 à 19 illustrent, de façon non limitative, différentes configurations possibles des surfaces d'appui 21, 22, et plus globalement de l'interface d'amortissement formée entre le poussoir 10 et le boîtier 15, 16 à travers l'organe amortisseur 20.

La figure 16 illustre une variante au sein de laquelle aussi bien la première surface d'appui 21 que la seconde surface d'appui 22 sont tronconiques, de formes sensiblement conjuguées, centrées sur l'axe de poussée (ZZ') et orientées dans le même sens, de sorte à pouvoir sensiblement s'emboîter par un appui de type cône/cône.

Dans l'absolu, selon cette configuration illustrée sur la figure 16, chacune des surfaces d'appui 21, 22 peut remplir à la fois le rôle de surface de répartition 23, grâce à son inclinaison par rapport à l'axe de poussée (ZZ'), et de surface de siège 24, la composante axiale 24A, L23 de la surface d'appui inclinée 21, 22 formant butée de retenue radialement à l'encontre de l'organe amortisseur 20 et, respectivement, la composante radiale 24R, H23, de cette même surface d'appui inclinée 21, 22 formant butée de retenue axialement à l'encontre dudit organe amortisseur 20.

En d'autres termes, dans cette configuration où les première et seconde surfaces d'appui 21, 22 sont sensiblement parallèles l'une à l'autre et inclinées, les rôles de surface de répartition 23 et de surface de siège 24 affectés auxdites première et seconde surfaces d'appui 21, 22 sont interchangeables.

Un avantage de cette configuration de la figure 16 est notamment qu'elle facilite le centrage du poussoir 10 par rapport à la culasse 16 lors du montage.

En revanche, cette même configuration présente l'inconvénient de ne pas offrir de maintien stable de l'organe amortisseur 20 pendant les opérations de montage.

La figure 17 illustre une variante au sein de laquelle la surface de répartition 23 inclinée est formée par la première surface d'appui 21, qui est ici tronconique et centrée sur l'axe de poussée, et dont le sommet fictif pointe en direction de la culasse 16, tandis que la surface de siège 24 est formée par la seconde surface d'appui 22, qui prend la forme d'un épaulement, annulaire, creusé dans la culasse 16.

Cette configuration, qui correspond par ailleurs à celle illustrée sur les figures 1 à 4, offre notamment un maintien très stable, tant axial que radial, de l'organe amortisseur 20 placé dans la culasse 16 à l'intérieur de l'épaulement, et ce aussi bien pendant les opérations de montage que pendant le fonctionnement du dispositif 1.

La figure 18 illustre une variante au sein de laquelle, à l'inverse de la variante précédente, la surface de répartition 23 inclinée est formée par la seconde surface d'appui 22, qui est ici tronconique et centrée sur l'axe de poussée (ZZ'), creusée dans la culasse 16, et dont le sommet fictif pointe en direction de la culasse 16, tandis que la surface de siège 24 est formée par la première surface d'appui 21, qui prend la forme d'un épaulement, annulaire, creusé dans le poussoir 10.

Ici encore, on obtiendra un maintien très stable de l'organe amortisseur 20 serré autour du poussoir, à l'intérieur de l'épaulement, et ce aussi bien pendant les opérations de montage que pendant le fonctionnement du dispositif 1.

Par commodité de description, lorsque la surface de siège 24 est formée par un épaulement, on pourra assimiler ledit épaulement à ladite surface de siège 24 et désigner ledit épaulement sous la même référence 24 que la surface de siège.

La figure 19 illustre encore une autre variante, au sein de laquelle la surface de siège 24 est formée par une rainure 40, de préférence annulaire, et de section droite semi-circulaire, qui est centrée sur l'axe de poussée (ZZ'), et qui s'ouvre sur une face, de préférence sensiblement perpendiculaire à l'axe de poussée (ZZ'), qui se trouve en vis-à-vis d'une surface de répartition 23 correspondante tronconique, centrée sur l'axe de poussée (ZZ').

Sur la figure 19, la rainure 40 est creusée dans la culasse 16 et s'ouvre sur une face supérieure de ladite culasse 16, qui est sensiblement perpendiculaire à l'axe de poussée (ZZ') et qui se trouve en vis-à-vis d'une surface de répartition 23 tronconique qui est ici formée par la première surface d'appui 21 appartenant au poussoir 10.

Le diamètre de la section droite semi-circulaire de la rainure 40 est de préférence sensiblement égal, ou très légèrement supérieur, au diamètre D20 de la section droite (au repos, avant déformation) de l'organe amortisseur 20, de sorte à pouvoir accueillir une portion significative, ici axialement au moins la moitié, de l'organe amortisseur 20.

Une telle configuration permet de poser l'organe amortisseur 20 de façon relativement stable dans la rainure 40 lors du montage, mais n'assure toutefois pas un maintien aussi efficace dudit organe amortisseur 20 que les variantes des figures 17 et 18, dans la mesure où ledit organe amortisseur est alors simplement posé, et non pas, contrairement aux deux variantes précédentes, serré par constriction sur le poussoir 10 (figure 18) ou dans la culasse 16 (figure 17).

D'autres spécificités et avantages de ces différentes variantes de réalisation seront décrites plus en détail dans ce qui suit.

Avantageusement, selon chaque direction azimutale concernée autour de l'axe de poussée (ZZ'), l'inclinaison de la surface de répartition 23 selon l'invention permet, au moyen d'une seule et même surface d'appui (la première surface d'appui 21 sur les figures 3, 4, 16, 17, 19, et la seconde surface d'appui 22 sur la figure 18), de répartir l'effet de l'action F_{2/10} exercée par la crémaillère 2 sur le poussoir 10, et par conséquent de répartir la réaction de l'organe amortisseur 20 (c'est-à-dire l'effort de retenue R_{20/10}), simultanément selon deux composantes d'effort de retenue, à savoir, tel que cela est illustré sur la figure 5 :
- une première composante d'effort de retenue axiale R_{20/10_A}, qui tend à repousser axialement, c'est-à-dire sensiblement parallèlement à l'axe de poussée (ZZ') (et ici vers le haut), le poussoir 10 à l'encontre de la crémaillère 2 (de sorte à plaquer la denture 2T, transverse à l'axe de poussée (ZZ'), contre le pignon d'entraînement 7), ladite première composante d'effort de retenue axiale R_{20/10_A} étant générée par le pincement élastique axial de l'organe amortisseur 20 entre la surface de répartition 23 d'une part et la composante d'extension radiale 24R de la surface de siège 24 d'autre part (ladite composante d'extension radiale 24R formant une butée qui s'oppose au déplacement axial de l'organe amortisseur 20), et
- une seconde composante d'effort de retenue radiale R_{20/10_R}, qui tend à repousser radialement le poussoir 10 vers l'axe de poussée (ZZ'), selon une direction sensiblement perpendiculaire audit axe de poussée (ZZ'), ladite seconde composante d'effort de retenue radiale R_{20/10}__{R} étant générée par le pincement élastique radial de ce même organe amortisseur 20 entre cette même surface de répartition 23 d'une part et la composante d'extension axiale 24A de la surface de siège 24 d'autre part (ladite composante d'extension axiale 24A formant une butée qui s'oppose au déplacement radial de l'organe amortisseur 20).

Le même organe amortisseur 20 joue ainsi, au contact de la surface de répartition 23 inclinée, à l'interface entre le poussoir 10 et le boîtier 15, 16, à la fois le rôle d'un ressort amortisseur axial et le rôle d'un ressort amortisseur radial.

L'invention favorise ainsi, au besoin, le renvoi en oblique de l'effort de retenue R_{20/10}, qui peut donc converger à la fois (axialement) vers la crémaillère 2 et (radialement) vers l'axe de poussée (ZZ'), ce qui assure un maintien bidirectionnel (radial et axial) du poussoir 10, particulièrement efficace et stable, au moyen d'une structure pourtant relativement simple.

En particulier, l'effort de retenue R_{20/10} pourra ainsi pointer en oblique sensiblement vers l'axe longitudinal (YY') de la crémaillère 2, c'est-à-dire en l'espèce vers le centre O₁₃ du tracé en arc de cercle définissant la surface de glissement 13 de ladite crémaillère 2.

Globalement, l'agencement des surfaces d'appui 21, 22 se présentera de préférence sensiblement sous la forme d'une cuvette, ou d'un entonnoir, dont l'ouverture large est tournée vers la crémaillère 2 et qui va en se rétrécissant, c'est-à-dire en se rapprochant radialement de l'axe de poussée (ZZ'), au fur et à mesure que l'on s'éloigne axialement de la crémaillère 2 (et du pignon 7) selon ledit axe de poussée (ZZ').

L'agencement des surfaces d'appui 21, 22 tendra ainsi à « plonger» à l'intérieur du périmètre délimité radialement par l'organe amortisseur 20.

De même, pour assurer un maintien en position de l'organe amortisseur 20 malgré les sollicitations obliques que subit ledit organe amortisseur, la seconde surface d'appui 22, et plus particulièrement la composante d'extension axiale 24A de la surface de siège 24, se trouvera en déport radial externe par rapport à la première surface d'appui 21, et plus particulièrement par rapport à la surface de répartition 23 inclinée, c'est-à-dire sera plus éloignée de l'axe de poussée (ZZ') que ladite première surface d'appui 21.

Plus globalement, d'un même côté de l'axe de poussée (ZZ'), la première surface d'appui 21, la fibre neutre O₂₀ de l'organe amortisseur 20, et la seconde surface d'appui 22 seront avantageusement étagées à la fois axialement (par éloignement croissant de la crémaillère 2 et du pignon 7) et radialement (par rayon croissant) dans cet ordre, les unes par rapport aux autres.

Par « fibre neutre » O₂₀, on désigne, au sens usuel de la théorie des poutres, la ligne génératrice de l'organe amortisseur 20 qui est formée par l'ensemble des centres de gravité de chacune des sections droites dont la succession constitue ledit organe amortisseur 20 autour de l'axe de poussée (ZZ'). Par commodité de notation, on pourra donc, dans ce qui suit, désigner par la référence O₂₀ aussi bien la « fibre neutre » de l'organe amortisseur 20 qu'un « centre de gravité » de l'une des sections droites de l'organe amortisseur 20 correspondant à ladite fibre neutre dans ladite section droite.

De façon particulièrement préférentielle, la surface de répartition 23 forme un tronc de cône qui est centré sur l'axe de poussée (ZZ'), et plus particulièrement sur l'axe générateur du poussoir 10, et dont le sommet S23 pointe, tel que cela est illustré sur les figures 3, 4, 16, 17, 18 et 19, dans le sens du recul axial du poussoir 10, c'est-à-dire à l'opposé de la crémaillère 2, et notamment à l'opposé de la crémaillère 2 et du pignon 7 par rapport à un plan dit « plan de jauge » PJ qui est normal à l'axe de poussée (ZZ') et qui contient la fibre neutre O20 de l'organe amortisseur 20.

Un tel agencement tronconique permet notamment de façonner aisément (par exemple par usinage ou par moulage) une surface de répartition 23 relativement étendue, bien adaptée à l'accueil et à l'utilisation d'un joint torique 20, et qui procure un effet de répartition des efforts selon toutes les directions azimutales autour de l'axe de poussée (ZZ'), ce qui contribue à équilibrer le poussoir 10 et à amortir les débattement dudit poussoir quelle que soit l'orientation des sollicitations que la crémaillère exerce sur ledit poussoir 10.

Par commodité de description, lorsque la surface de répartition 23 est formée par un tronc de cône, on pourra assimiler ledit tronc de cône à ladite surface de répartition 23 et désigner ledit tronc de cône sous la même référence 23 que la surface de répartition.

De préférence, notamment par commodité de fabrication, et en particulier pour simplifier le contrôle métrologique des dimensions du poussoir 10, ou respectivement de la culasse 16, dans lequel (laquelle) est aménagée la surface de répartition 23, la paroi latérale du tronc de cône formant la surface de répartition 23 est sensiblement rectiligne, tel que cela est illustré sur les figures 4 et 16 à 19.

Ceci étant, il n'est pas exclu que ladite paroi du tronc de cône 23 puisse, en variante, présenter un léger bombé convexe, ou une légère incurvation concave.

De préférence, tel que cela est notamment visible sur les figures 3 et 4, l'angle d'inclinaison θ₂₃ de la surface de répartition 23 par rapport à l'axe de poussée (ZZ'), c'est-à-dire ici plus particulièrement le demi-angle au sommet du tronc de cône 23, est compris entre 30 degré et 60 degrés, et de préférence sensiblement égal à 45 degrés, voire sensiblement égal à 55 degrés.

Avantageusement, le choix d'une telle inclinaison θ₂₃ confère à la surface de répartition 23 une bonne capacité de transmission des efforts, tant axialement que radialement, et par conséquent une bonne capacité d'interaction et de retenue, tant axiale que radiale, à l'encontre de l'organe amortisseur 20.

Une telle inclinaison permet donc en définitive d'obtenir une bonne répartition des composantes axiale R_{20/10_A} et radiale R_{20/10_R} de l'effort de retenue R_{20/10}, et assure ainsi l'équilibrage anti-basculement du poussoir 10.

On notera à ce titre que pour éviter une trop forte dispersion radiale, c'est-à-dire pour éviter qu'un effort (principalement) axial exercé par la crémaillère 2 sur le poussoir 10 n'engendre, par conversion dudit effort à travers la surface de répartition 23 (par effet de coin écarteur), une trop forte action radiale sur le dispositif 1, on évitera d'incliner trop « verticalement » la surface de répartition 23, et on privilégiera donc un angle d'inclinaison θ₂₃ qui soit le plus grand possible, et notamment qui soit strictement supérieur à 45 degrés, par exemple voisin de 55 degrés.

A titre indicatif, la surface de répartition 23 (et plus particulièrement la portion rectiligne et inclinée de ladite surface de répartition, destinée à être en contact avec l'organe amortisseur 20) pourra s'étendre radialement sur une largeur L23 égale ou supérieure à 50 %, à 60 %, voire à 75 % du diamètre (au repos) D20 de la section droite du joint torique 20, et/ou comprise entre 2 mm et 3 mm, voire 5 mm.

De même, à titre indicatif, la surface de répartition 23 (et plus particulièrement la portion rectiligne et inclinée de ladite surface de répartition, destinée à être en contact avec l'organe amortisseur 20) pourra s'étendre axialement sur une hauteur H23 égale ou supérieure à 50 %, à 60 %, voire à 75 % du diamètre (au repos) D20 de la section droite du joint torique 20, et/ou comprise entre 2 mm et 3 mm, voire 5 mm.

De telles dimensions préférentielles procureront avantageusement une étendue de la surface de répartition 23 qui sera suffisante pour assurer une bonne assise à l'organe amortisseur 20, ainsi qu'une transmission efficace des efforts, et pour autoriser la libre déformation fonctionnelle dudit organe amortisseur 20.

Par ailleurs, on notera que l'agencement de la surface de siège 24 pourra varier, pourvu que ladite surface de siège présente à la fois une composante d'extension axiale 24A et une composante d'extension radiale 24R, c'est-à-dire s'étende, dans son ensemble, aussi bien radialement que radialement (et pas exclusivement radialement ou exclusivement axialement), de manière à pouvoir former d'une part, par sa composante d'extension axiale 24A, une butée radiale qui permet d'opposer à l'organe amortisseur 20 une composante d'effort radiale, et de bloquer sensiblement le déplacement radial dudit organe amortisseur 20 (transversalement à l'axe de poussée (ZZ')), et d'autre part, par sa composante d'extension radiale 24R, une butée axiale qui permet d'opposer à l'organe amortisseur 20 une composante d'effort axiale, et ainsi de bloquer sensiblement le déplacement axial dudit organe amortisseur 20, tel que cela est schématisé sur la figure 5.

Dans l'absolu, il serait ainsi envisageable de former une surface de siège 24 continûment penchée, par exemple sensiblement tronconique ou incurvée, l'inclinaison de la surface par rapport à l'axe de poussée (ZZ') lui conférant simultanément les deux composantes d'extension 24A, 24R nécessaires.

Un exemple de variante à surface de siège 24 tronconique est représenté sur la figure 16, au sein de laquelle aussi bien la surface de répartition 23 que la surface de siège 24 présentent des formes tronconiques, sensiblement conjuguées et emboîtées l'une dans l'autre, si bien que la composante d'extension radiale 24R correspond à l'étendue radiale de la pente qui forme le tronc de cône 24, et la composante d'extension axiale 24A correspond à l'étendue axiale de cette même pente du tronc de cône 24.

On notera que lorsque la surface de siège 24 est (également) tronconique, ses dimensions d'extension radiale 24R et axiale 24A pourront répondre aux mêmes règles de dimensionnement que celles mentionnées plus haut en lien avec la largeur radiale L23 et la hauteur axiale H23 respectivement de la surface de répartition 23.

Selon une possibilité de réalisation, on pourra choisir un dimensionnement tel que l'on aura sensiblement (en mesure de longueur) : 24R = L23, et 24A = H23, pourvu que les surfaces de répartition 23 et de siège 24 présentent un chevauchement axial, et un chevauchement radial, suffisant pour y interposer l'organe amortisseur 20.

Un exemple de variante possédant cette fois une surface de siège 24 de forme incurvée est représenté sur la figure 19, au sein de laquelle la surface de siège 24 est formée par une rainure 40 (annulaire) de section semi-circulaire, centrée sur l'axe de poussée (ZZ').

La composante d'extension radiale 24R correspond alors sensiblement au diamètre de la section de ladite rainure 40, c'est-à-dire à la dimension du fond de ladite rainure 40 projetée axialement sur un axe radial perpendiculaire à l'axe de poussée (ZZ'), tandis que la composante d'extension axiale 24A correspond sensiblement au rayon de la section de ladite rainure 40, c'est-à-dire à la profondeur de ladite rainure 40 projetée radialement sur l'axe de poussée (ZZ').

Toutefois, de façon particulièrement préférentielle, la composante d'extension radiale 24R et la composante d'extension axiale 24A de la surface de siège 24 sont formées respectivement, tel que cela est notamment visible sur les figures 4, 17 et 18, par une première portion de surface 24R et une seconde portion de surface 24A qui sont sécantes l'une avec l'autre, de sorte que la surface de siège 24 forme un épaulement.

En d'autres termes, on préfère subdiviser la surface de siège 24 en deux sous-surfaces de siège 24R, 24A sécantes, qui se rejoignent de préférence en formant une ligne brisée au niveau d'un « pli » 26 qui marque une cassure d'orientation, de telle sorte que chacune desdites sous-surfaces 24R, 24A s'étend majoritairement voire exclusivement selon une direction (axiale, ou radiale) distincte de la direction d'extension de l'autre sous-surface 24A, 24R.

C'est notamment le cas de la variante illustrée sur la figure 17, au sein de laquelle l'épaulement formé par la surface de siège 24 est creusé dans le boîtier, et plus particulièrement dans la culasse 16 (ce qui est également le cas sur les figures 1 à 4), ou bien encore de la variante illustrée sur la figure 18, au sein de laquelle l'épaulement formé par la surface de siège 24 est cette fois creusé dans le poussoir 10.

Ainsi, la première portion de surface 24R (première sous-surface de siège) s'étendra de préférence principalement radialement, voire exclusivement radialement, c'est-à-dire perpendiculairement à l'axe de poussée (ZZ'), selon un plan normal audit axe de poussée (ZZ'), tandis que la seconde portion de surface 24A (seconde sous-surface de siège) s'étendra de préférence principalement axialement, voire exclusivement axialement, c'est-à-dire parallèlement à l'axe de poussée (ZZ'), ici selon un cylindre, de préférence de base circulaire, centré sur et généré par ledit axe rectiligne de poussée (ZZ').

Avantageusement, le fait de disposer les portions de surfaces 24R, 24A selon un épaulement 24 permet de loger et de maintenir efficacement l'organe amortisseur 20 au creux dudit épaulement, du fait que ledit organe amortisseur 20 est bordé, tant axialement que radialement, par des butées très nettement marquées.

Un tel maintien bidirectionnel est notamment utile lors de l'assemblage du dispositif 1, car on peut ainsi avantageusement enfiler l'organe amortisseur 20, et plus particulièrement le joint torique 20, dans l'épaulement 24, dans lequel ledit joint torique 20 se trouve en appui, maintenu par constriction et friction, avant d'engager la culasse 16 en vis-à-vis du poussoir 10.

Ainsi, dans la variante de la figure 17, et des figures 1 à 4, l'organe amortisseur 20 pourra être préalablement enfilé et serré, par compression centripète exercée sur le diamètre extérieur dudit organe amortisseur 20, à l'intérieur de l'épaulement 24 creusé dans la culasse 16, avant que ladite culasse 16 ne soit engagée et vissée dans la chemise 15.

Dans la variante de la figure 18, l'organe amortisseur 20 pourra être préalablement enfilé autour du poussoir 10, dans l'épaulement 24 creusé dans ce dernier, et maintenu serré, par extension centrifuge exercée sur le diamètre intérieur dudit organe amortisseur 20, contre ledit poussoir 10 pendant que l'on engage ledit poussoir dans la chemise 15.

Cela évite que, pendant les manipulations de la culasse 16 et/ou du poussoir 10 nécessaires à l'assemblage, ledit joint torique 20 ne chute ou ne glisse au risque de se placer de travers, d'être pincé ou endommagé.

Un tel maintien bidirectionnel par épaulement 24, stable et robuste, est également appréciable en fonctionnement, puisqu'il empêche l'organe amortisseur 20, et plus particulièrement le joint torique 20, de fuir ou d'être délogé lorsque ledit joint torique 20 est comprimé entre le poussoir 10 et le boîtier 15, 16, et qu'il permet de transmettre *via* ledit joint torique 20 des composantes d'effort de retenue (R_{20/10_A} et R_{20/10_R}) élevées dans les deux directions axiale et radiale.

On notera que, de préférence, notamment par commodité de fabrication et pour optimiser l'efficacité du maintien bidirectionnel par l'épaulement 24, la première portion de surface de siège 24R et la seconde portion de surface de siège 24A se coupent sensiblement à angle droit, tel que cela est illustré sur les figures 4, 17 et 18.

Par ailleurs, le boîtier 15, 16 comprenant une chemise 15 ainsi qu'une culasse 16, distincte de la chemise, et qui est rapportée et fixée sur ladite chemise 15 de manière à obturer ladite chemise à l'opposé de l'ouverture d'accès 17, tel que cela a été décrit plus haut, les composantes d'extension, radiale 24R et axiale 24A, de la surface de siège 24 sont de préférence toutes deux formées par des portions de la culasse 16.

En d'autres termes, la surface de siège 24, et plus particulièrement l'épaulement 24, est de préférence entièrement taillé(e) dans la culasse 16 (sans s'étendre à la chemise 15).

Plus particulièrement, la composante d'extension radiale 24R de la surface de siège 24 est de préférence formée par la paroi de fond (ici plane, et sensiblement perpendiculaire à l'axe de poussée (ZZ')) d'un lamage 27 qui est creusé (axialement) dans ladite culasse 16 et centré sur l'axe de poussée (ZZ'), tandis que, respectivement, la composante d'extension axiale 24A de ladite surface de siège 24 est formé par la paroi latérale (ici cylindrique et sensiblement parallèle à l'axe de poussée (ZZ')) de ce même lamage 27 qui est creusé dans ladite culasse et centré sur l'axe de poussée (ZZ').

Un tel agencement permet tout d'abord un façonnage simple et rapide, soit par moulage, soit par usinage (en une seule opération de lamage), de la surface de siège 24.

En outre, en formant intégralement la surface de siège 24 d'un seul tenant dans la culasse 16, on obtient une structure robuste et stable, qui permet, lors de l'assemblage du dispositif 1, de positionner directement et précisément l'organe amortisseur 20 à son emplacement fonctionnel définitif au contact de ladite surface de siège 24, au sein de la culasse 16, avant de rapporter ladite culasse 16 contre le poussoir 10 et sur la chemise 15.

Cette même structure monolithique de la surface de siège 24 permet ensuite un maintien solide de l'organe amortisseur 20 pendant le fonctionnement du dispositif 1.

Enfin, et surtout, l'aménagement des deux composantes (axiale 24A et radiale 24R) de la surface de siège 24 au sein de la culasse 16 permet, selon une caractéristique qui peut constituer une invention à part entière, d'interposer radialement la culasse 16 (par ailleurs préférentiellement réalisée en matériau polymère, et rapportée sur la chemise 15) entre d'une part la paroi latérale (radialement externe) du poussoir 10, et plus particulièrement la surface de répartition 23 appartenant audit poussoir 10, et d'autre part la paroi interne 15I de la chemise 15 (de préférence métallique), de telle sorte que la culasse 16 elle-même forme une barrière antichoc, qui limite le débattement radial du poussoir 10 et empêche ledit poussoir 10 de heurter directement, et plus globalement d'entrer en contact avec, la chemise 15.

Plus particulièrement, l'invention permet donc d'interposer radialement, entre la paroi latérale du poussoir 10 et la paroi interne 15I de la chemise 15, une portion (annulaire) de culasse 16, centrée sur l'axe de poussée (ZZ'), et qui entoure le poussoir 10 tout autour dudit axe de poussée (ZZ').

De même, l'organe amortisseur 20 peut ainsi être interposé entre la paroi latérale du poussoir 10, et plus particulièrement la surface de répartition 23 dudit poussoir, et ladite portion annulaire de culasse 16.

La portion annulaire de culasse 16 interposée entre le poussoir 10 et la chemise 15 formera ainsi (au moins) la composante d'extension axiale 24A de la surface de siège, qui reçoit et bloque, selon la direction radiale centrifuge, l'organe amortisseur 20 en élastomère sur lequel s'appuie (au moins selon ladite direction radiale centrifuge) la paroi latérale du poussoir 10.

Du fait de cet empilement concentrique poussoir 10/organe amortisseur 20/culasse 16, le poussoir 10 se retrouve avantageusement suspendu élastiquement contre (et au sein de) la culasse 16, selon la direction radiale, à distance de la paroi interne de la chemise 15.

En outre, l'utilisation préférentielle d'une culasse 16 en matériau polymère permet d'atténuer le bruit provoqué par un éventuel choc du poussoir 10, dans la mesure où un tel choc se produit alors contre ladite culasse 16, en plastique, ici contre la portion annulaire susmentionnée de la culasse 16 qui chevauche axialement le poussoir 10 (et plus particulièrement qui chevauche la portion de pied 10B dudit poussoir), plutôt que contre une partie métallique du dispositif 1, telle que la chemise 15, ce qui modifie favorablement la sonorité (le « timbre ») dudit choc.

On remarquera du reste que la culasse 16 peut avantageusement, par sa portion annulaire susmentionnée, chevaucher axialement le poussoir 10 sur au moins une partie de la hauteur axiale totale H10 dudit poussoir 10, non seulement en vis-à-vis de la première surface d'appui 21, mais également au-delà, sur toute une portion terminale, ici une portion inférieure, dite « portion de pied 10B » dudit poussoir 10, tel que cela sera détaillé plus loin.

De préférence, tel que cela a été mentionné plus haut, la crémaillère 2 possède un axe longitudinal (YY'), selon lequel elle coulisse par rapport au poussoir 10, et présente, en section transverse à son axe longitudinal (YY'), une surface de glissement 13 qui est générée sensiblement selon un arc de cercle et qui vient coopérer en appui glissant sur une surface de réception 14 correspondante prévue dans le poussoir 10.

De préférence, au moins dans le plan de section dit « plan frontal » P0, sensiblement perpendiculaire à l'axe longitudinal (YY') de la crémaillère 2 et contenant l'axe de poussée (ZZ'), la ligne fictive, dite « frontière de basculement » L_{T}, qui passe par le centre O₁₃ de l'arc de cercle générant la surface de glissement 13 d'une part et par le centre (centre de gravité) O₂₀ de la section droite de l'organe amortisseur 20 d'autre part (c'est-à-dire par la fibre neutre O₂₀ dudit organe amortisseur 20), présente, par rapport à l'axe de poussée (ZZ'), et tel que cela est visible sur les figures 3 et 4, un angle d'ouverture, dit « angle d'assise » θ_{LT}, qui est égal ou supérieur à 20 degrés, et inférieur ou égal à 40 degrés, et de façon plus préférentielle compris entre 20 degrés et 35 degrés.

Selon une possibilité de réalisation, ledit angle d'assise θ_{LT} sera choisi de manière à être sensiblement égal à 35 degrés.

Avantageusement, on comprendra que, tel que cela est illustré sur la figure 6, tant que l'action F_{2/10} de la crémaillère 2 sur le poussoir 10 est contenue dans le secteur angulaire compris entre l'axe de poussée (ZZ') et la frontière de basculement L_{T}, c'est-à-dire tant que ladite action F_{2/10} de la crémaillère 2 sur le poussoir 10 pointe vers l'intérieur du périmètre fermé défini, autour de l'axe de poussée (ZZ'), par la fibre neutre **O**₂₀ de l'organe amortisseur 20, alors le moment de ladite action F_{2/10} de la crémaillère 2 sur le poussoir 10, créé par rapport à la fibre neutre O₂₀ de l'organe amortisseur 20, tendra à rappeler le poussoir 10 vers l'intérieur du périmètre annulaire défini par ledit organe amortisseur 20.

En pareille situation, l'action F_{2/10} de la crémaillère 2 sur le poussoir 10 aura pour effet d'auto-équilibrer le poussoir 10, au sein de la culasse 16, en faisant porter ledit poussoir 10 sur la totalité de l'organe amortisseur 20, qui sera ainsi comprimé axialement de part et d'autre (à gauche comme à droite, sur les figures 3 et 6) de l'axe de poussée (ZZ').

L'effort de retenue R_{20/10}, et plus globalement la résultante des efforts de retenue exercés tout autour de l'axe de poussée (ZZ'), le long de la couronne de contact selon laquelle la surface de répartition 23 s'appuie sur l'organe amortisseur 20, pourra ainsi équilibrer ainsi l'action de la crémaillère.

Le poussoir 10 sera donc soutenu de façon stable, sans risque de basculer.

A l'inverse, tel que l'illustre la figure 7, il convient d'éviter que l'action F_{2/10} de la crémaillère 2 sur le poussoir 10 puisse s'exercer au-delà de la frontière de basculement L_{T}, car cela créerait, par rapport à la fibre neutre O₂₀ de l'organe amortisseur 20, un moment qui tendrait à décoller le poussoir 10 dudit organe amortisseur 20 d'un côté de l'axe de poussée (ZZ') (à gauche sur la figure 7) et à faire basculer le poussoir 10 par-dessus la fibre neutre O₂₀, et donc par-dessus l'organe amortisseur 20, du côté opposé de l'axe de poussée (ZZ') (ici vers la droite sur la figure 7).

C'est pourquoi l'angle d'assise θ_{LT} sera choisi de sorte à présenter une valeur minimale suffisamment élevée (typiquement supérieure ou égale à 30 degrés, voire égale à 35 degrés), supérieure à la valeur qui correspond au secteur angulaire d'action θ_{2/10} prévisible de la crémaillère 2 sur le poussoir 10.

A titre d'exemple, sur la figure 6, l'angle d'assise θ_{LT} devra donc représenter plus de la moitié du secteur angulaire total occupé par le secteur d'action θ_{2/10} prévisible.

Par ailleurs, la valeur maximale dudit angle d'assise θ_{LT} sera choisie suffisamment basse pour limiter l'étalement radial de l'organe amortisseur 20, et par conséquent l'étendue radiale de la culasse 16, du poussoir 10, et plus globalement du dispositif 1, de manière à préserver la compacité dudit dispositif 1.

De même, on préfèrera limiter l'angle d'assise θ_{LT}, de manière à limiter l'intensité de la composante radiale de l'action F_{2/10} de la crémaillère 2 sur le poussoir 10, ainsi que la pression de contact de la crémaillère 2 sur le patin 12.

C'est pourquoi on fixera de préférence la valeur dudit angle d'assis θ_{LT} à une valeur inférieure ou égale à 40 degrés, voire de préférence égale ou inférieure à 35 degrés.

Par ailleurs, on remarquera que si l'angle d'assise θ_{LT} a été défini en référence à l'axe longitudinal (YY') de la crémaillère, on pourrait tout aussi bien le définir *mutatis mutandis* par rapport à l'axe générateur du berceau 11 (en prenant le cas échéant en considération la légère excentration axiale de la crémaillère 2 par rapport audit axe générateur du berceau 11).

De même, on pourrait définir l'angle d'assise θ_{LT} en référence au centre de la surface de répartition 23 plutôt qu'en référence à la fibre neutre de l'organe amortisseur 20.

Ainsi, on pourrait par exemple dimensionner sensiblement le poussoir 10 en imposant que l'angle formé entre d'une part l'axe central (l'axe générateur) (ZZ') dudit poussoir 10 et d'autre part la ligne fictive qui passe par le centre de la surface de répartition 23 dudit poussoir 10 et par le centre de l'axe longitudinal du berceau 11 (ou du patin 12), lequel correspond sensiblement à l'axe longitudinal de la crémaillère (YY'), soit égal aux valeurs d'angle d'assise θ_{LT} susmentionnées.

Par ailleurs, le boîtier 15, 16 comprenant une chemise 15 ainsi qu'une culasse 16, distincte de la chemise 15, et qui est rapportée et fixée sur ladite chemise 15 de manière à obturer ladite chemise à l'opposé de l'ouverture d'accès 17, tel que cela a été décrit plus haut, le poussoir 10 présente de préférence, tel que cela est notamment illustré sur les figures 3, 11 et 13, une structure étagée axialement qui comporte d'une part une portion de tête 10A, de forme sensiblement conjuguée à la forme de la paroi interne 15I de la chemise 15 en vis-à-vis de laquelle coulisse ledit poussoir 10, et d'autre part une portion de pied 10B, qui prolonge axialement la portion de tête 10A.

Selon une caractéristique préférentielle, qui peut même constituer une invention à part entière indépendamment de la présence et/ou de l'agencement de l'organe amortisseur 20, au moins une partie du poussoir 10, en l'espèce la portion de pied 10B du poussoir 10, pénètre dans, et coopère avec, un alésage de guidage 30 creusé dans la culasse 16 (et ici centré sur l'axe de poussée (ZZ')), de sorte à guider le poussoir 10 en translation axiale par rapport à ladite culasse 16.

La portion de tête 10A du poussoir 10 correspond en pratique à la portion du poussoir la plus proche de la crémaillère 2, c'est-à-dire la portion (supérieure sur la figure 3) dans laquelle est creusé le berceau 11, tandis que la portion de pied 10 (inférieure sur la figure 3) est la plus éloignée de la crémaillère 2.

La portion de pied 10B sera de préférence plus étroite que la portion de tête 10A, c'est-à-dire présentera un diamètre inférieur au diamètre de ladite portion de tête 10A, de manière à former un resserrement autour de l'axe de poussée (ZZ').

En outre, le diamètre de la portion de pied 10B sera de préférence inférieur au diamètre (minimal) de l'organe amortisseur 20.

De préférence, la portion de pied 10B pourra ainsi être insérée à l'intérieur du périmètre de l'organe amortisseur 20, et plus particulièrement à l'intérieur du périmètre défini par la ligne neutre O₂₀ dudit organe amortisseur, et traverser le plan de jauge P_{J} pour s'engager à l'intérieur de l'alésage 30 qui assure le guidage de ladite portion de pied 10B.

Un tel agencement permettra de simplifier l'assemblage du dispositif 1, et d'améliorer la stabilité du poussoir 10, en appui sur l'organe amortisseur 20.

De préférence, la portion de pied 10B présentera sensiblement une forme cylindrique de base circulaire, agencée concentriquement à la portion de tête 10A, c'est-à-dire centrée sur l'axe générateur (ZZ') du poussoir 10.

On notera également que, de préférence, la surface de répartition 23 inclinée (de préférence annulaire, et plus particulièrement tronconique) forme la transition entre la portion de tête 10A et la portion de pied 10B du poussoir 10, tel que cela est notamment illustré sur les figures 3, 4, 16, 17 et 19.

Dans le cas de la variante illustrée sur la figure 18, c'est la surface de siège 24, formant épaulement, qui coïncidera avec l'épaulement qui marque la transition de diamètre entre la portion de tête 10A et la portion de pied 10B du poussoir 10.

Dans tous les cas, on pourra donc, notamment par commodité de fabrication, profiter du resserrement entre la portion de tête 10A et la portion de pied 10B pour créer la surface de répartition 23, ou, respectivement la surface de siège 24.

Lorsque la surface de siège 24 est formée dans le boîtier 15, 16, et plus particulièrement dans la culasse 16, l'alésage de guidage 30 sera de préférence creusé à partir du fond du lamage 27 formant la surface de siège 24 bidirectionnelle (l'épaulement), de sorte à prolonger axialement la profondeur dudit lamage 27.

L'alésage 30 sera alors de préférence situé, au centre de la culasse 16, coaxialement au lamage 27, tel que cela est notamment visible sur les figures 3 et 4.

Ainsi, selon un agencement à la fois compact et facile à fabriquer, le lamage 27 formant la surface de siège 24 pourra border et entourer (complètement) l'embouchure (ici supérieure) de l'alésage de guidage 30.

Il pourra en aller de manière analogue pour les variantes dans lesquelles la surface de siège 24 (figure 16) ou même, le cas échéant, la surface de répartition 23 (figure 18), est formée par un évidement tronconique dans la culasse 16. L'alésage de guidage 30 pourra alors se situer dans le prolongement axial dudit tronc ce cône, ledit alésage étant ainsi raccordé à la petite base dudit tronc de cône, et présentant de préférence un diamètre égal à celui de ladite petite base.

Ainsi, l'alésage de guidage 30 présentera, vis-à-vis du poussoir, une embouchure évasée, formée selon le cas par la surface de siège 24 tronconique ou, respectivement, par la surface de répartition 23 tronconique.

On notera que, avantageusement, l'engagement de la portion de pied 10B du poussoir dans l'alésage 30 de la culasse 16 permet d'offrir une hauteur axiale de guidage importante au poussoir 10, et donc de réduire le débattement latéral du poussoir ainsi que les risques de coincement par arc-boutement, notamment lors du montage, tout en conservant globalement une bonne compacité du dispositif 1.

Par ailleurs, la portion de pied 10B du poussoir 10 est de préférence pourvue d'un logement tubulaire 31 qui reçoit l'organe de rappel primaire (ressort hélicoïdal) 25.

Ledit logement tubulaire 31 est avantageusement délimité par une cloison 34, qui se trouve radialement interposée entre l'organe de rappel primaire 25 d'une part, et la paroi de l'alésage de guidage 30 et l'organe amortisseur 20 d'autre part. C'est donc la surface radialement externe de ladite cloison 34 qui coopère avec l'alésage 30 pour guider le poussoir 10.

Un tel agencement creux de la portion de pied 10B permet avantageusement de loger dans un espace restreint plusieurs composants réalisant différentes fonctions, parmi lesquels le poussoir 10, l'organe de rappel primaire 25, l'organe amortisseur 20, la culasse 16, et les surfaces assurant le guidage en translation du poussoir 10.

Par ailleurs, tel que cela est notamment visible sur les figures 3, 13 et 15, la surface de répartition 23 inclinée se prolonge de préférence par une gorge de dégagement annulaire 32, creusée axialement dans la portion de tête 10A (ici dans la face inférieure de ladite portion de tête, et à l'extrémité supérieure de la surface de répartition 23) de sorte à pouvoir accueillir au moins en partie la matière constitutive de l'organe amortisseur élastique 20 qui reflue lorsque ledit organe amortisseur 20 se déforme sous l'effet de la compression provoquée par le recul du poussoir 10.

Ladite gorge de dégagement 32, qui peut accueillir la matière de l'organe amortisseur 20 lorsque ladite matière est chassée par compression, favorise la libre déformation élastique de l'organe amortisseur 20.

L'augmentation de la raideur du dispositif 1, au fur et à mesure du recul du poussoir 10, sera donc particulièrement progressive, ce qui rendra le rappel du poussoir 10 à l'encontre de la crémaillère 2 efficace et fluide, sans à-coup, ni choc, ni augmentation brutale de raideur.

En outre, la liberté de déformation offerte à l'organe amortisseur 20 par la gorge de dégagement 32 permet d'éviter toute déformation plastique permanente et irréversible de l'organe amortisseur 20. L'organe amortisseur 20 conserve ainsi avantageusement au fil du temps sa raideur, et donc son effet ressort, dans toutes les plages de recul du poussoir 10.

De préférence, tel que cela est illustré sur la figure 4, le jeu radial J_{B} (ci après « second jeu radial ») entre la portion de pied 10B du poussoir et l'alésage de guidage 30 de la culasse 16 est strictement inférieur au jeu radial J_{A} (ci-après « premier jeu radial ») entre la portion de tête 10A du poussoir et la paroi interne 15I de la chemise 15.

Avantageusement, c'est donc la culasse 16, entourant la portion de pied 10B du poussoir, qui assure le guidage le plus précis du poussoir 10, et bloque radialement le débattement latéral dudit poussoir 10 (dans sa globalité, c'est-à-dire aussi bien le débattement de la portion de pied 10B que celui de la portion de tête 10A), de telle manière qu'aucune partie dudit poussoir 10 ne puisse atteindre la chemise 15 et entrer directement en contact avec la paroi interne 15I de ladite chemise.

Ici encore, on observera que, du fait que la culasse 16 est rapportée à l'intérieur la chemise 15 et que le poussoir 10 pénètre lui-même au moins en partie à l'intérieur de ladite culasse 16 (ici par la portion de pied 10B), la culasse 16 forme, par emboîtement, un tampon anti-basculement et antichoc, interposé radialement entre le poussoir 10 et la chemise 15.

En outre, grâce en particulier au dimensionnement approprié des premier et second jeux radiaux J_{A}, J_{B}, c'est la culasse 16, et non la chemise 15 qui, le cas échéant, encaisse les éventuels chocs du poussoir 10 contre le boîtier 15, 16.

Ainsi, même en cas de choc, celui-ci se produit contre la culasse en matériau polymère, et non contre la chemise métallique, ce qui permet d'éviter une sonorité « métallique » dudit choc ou une résonance du bruit dudit choc, et rend ainsi le fonctionnement du poussoir 10 particulièrement silencieux, quoi qu'il advienne.

Avantageusement, le choix d'opérer le guidage du poussoir 10 au niveau de la portion de pied 10B, par l'alésage 30 de la culasse 16, plutôt qu'au niveau de la portion de tête 10A, autorisera des valeurs de premier jeu radial J_{A} élevées, et permettra donc de relâcher les tolérances de fabrication concernant la portion de tête 10A dudit poussoir, et de réduire le coût de fabrication en conséquence.

En prévoyant un premier jeu radial J_{A} relativement élevé, on facilite en outre l'engagement du poussoir 10 dans la chemise 15, lors du montage, sans risque de coincer par arc-boutement ledit poussoir 10 contre la paroi interne 15I de la chemise 15.

De préférence, le second jeu radial J_{B} entre la portion de pied 10B du poussoir et l'alésage de guidage 30 de la culasse 16 sera défini par des reliefs 33 radialement saillants, de type cannelures.

Par rapport à un cylindre lisse, un tel agencement avec reliefs 33 permettra notamment d'obtenir une meilleure précision sur le diamètre de la portion de pied 10B, lors de la fabrication du poussoir 10 par moulage par injection.

Plus particulièrement, l'utilisation de reliefs 33 permet de limiter, après assemblage, la dispersion du jeu de guidage fonctionnel, c'est-à-dire la dispersion du second jeu radial J_{B} entre le poussoir (la portion de pied 10B du poussoir) et la paroi de l'alésage de guidage 30 de la culasse 16.

En définitive, on pourra donc fabriquer un poussoir 10 et un dispositif 1 meilleur marché, sans pour autant compromettre la qualité de guidage du poussoir 10.

A titre indicatif, le premier jeu radial J_{A} (large) entre la portion de tête 10A du poussoir et la paroi interne 15I de la chemise 15 pourra être sensiblement compris entre 500 µm (0,5 mm) et 1000 µm (1 mm), alors que le second jeu radial J_{B} (plus précis) entre la portion de pied 10B du poussoir et l'alésage de guidage 30 pourra être sensiblement compris entre 150 µm et 400 µm (pour des diamètres respectifs typiques de l'ordre de 32 mm à 40 mm pour la portion de tête 10A, et 22 mm à 30 mm pour la portion de pied 10B).

Le second jeu radial J_{B} permettra avantageusement d'obtenir un ajustement glissant, avec jeu, du poussoir 10 par rapport à la culasse 16.

On notera à ce titre que, l'inclinaison, et plus particulièrement la forme tronconique, de la surface de répartition 23 procure un effet d'auto-centrage, ainsi qu'un effet anti-basculement, du poussoir 10 dans la culasse 16, et plus globalement du poussoir 10 dans la chemise 15, si bien qu'il n'est pas nécessaire que le second jeu radial J_{B} soit particulièrement précis (et donc étroit) pour assurer un guidage de qualité du poussoir 10 dans la chemise 15.

Bien entendu, l'invention, telle que définie par ailleurs dans les revendications, n'est nullement limitée aux seules variantes de réalisation décrites, l'homme du métier étant notamment à même d'isoler ou de combiner librement entre elles l'une ou l'autre des caractéristiques décrites dans ce qui précède, ou de leur substituer des équivalents.

## Revendications

1. Dispositif (1) de rattrapage de jeu pour crémaillère (2), ledit dispositif (1) comprenant un poussoir (10) destiné à venir exercer un effort de poussée (F) contre une crémaillère (2), ledit poussoir (10) étant monté mobile et guidé en translation, selon un axe de poussée (ZZ'), dans un boîtier (15, 16) qui est agencé de sorte à former d'une part une butée axiale qui fait obstacle au recul axial du poussoir (10) selon l'axe de poussée (ZZ'), et d'autre part une butée radiale qui fait obstacle à l'éloignement radial du poussoir transversalement à l'axe de poussée (ZZ'), ledit dispositif (1) comprenant également un organe amortisseur (20) élastique, qui est interposé entre le poussoir (10) et le boîtier (15, 16), en appui respectivement contre une première surface d'appui (21) appartenant au poussoir (10) et une seconde surface d'appui (22) appartenant au boîtier (15, 16), ledit dispositif (1) étant **caractérisé en ce que** l'une au moins desdites première et seconde surfaces d'appui (21, 22), dite « surface de répartition » (21, 23), est inclinée par rapport à l'axe de poussée (ZZ'), et **en ce que** l'autre desdites première et seconde surfaces d'appui (21, 22), dite « surface de siège » (22, 24), présente, en vis-à-vis de la surface de répartition (21, 23) et à l'encontre de l'organe amortisseur (20) élastique, au moins une composante d'extension radiale (24R), qui permet à ladite surface de siège (22, 24) d'agir axialement sur l'organe amortisseur (20), et au moins une composante d'extension axiale (24A), qui permet à ladite surface de siège (22, 24) d'agir radialement sur l'organe amortisseur (20), de telle sorte que lorsque le poussoir (10) comprime l'organe amortisseur (20) élastique contre le boîtier (15, 16), l'organe amortisseur (20) élastique exerce en retour sur le poussoir (10) un effort de retenue (R_{20/10}) qui tend à rappeler simultanément ledit poussoir (10) axialement en direction de la crémaillère (2) et transversalement en direction de l'axe de poussée (ZZ').

2. Dispositif (1) selon la revendication 1 **caractérisé en ce que** l'organe amortisseur élastique (20) est formé par un anneau en élastomère.

3. Dispositif (1) selon la revendication 2, dans lequel l'organe amortisseur élastique (20) comprend une section droite circulaire, tel un joint torique.

4. Dispositif (1) selon la revendication 1, **caractérisé en ce que** la crémaillère (2) possède un axe longitudinal (YY'), selon lequel elle coulisse par rapport au poussoir (10), **en ce que** la crémaillère (2) présente, en section transverse à son axe longitudinal (YY'), une surface de glissement (13) qui est générée sensiblement selon un arc de cercle et qui vient coopérer en appui glissant sur une surface de réception (14) correspondante prévue dans le poussoir (10), et **en ce que**, au moins dans un plan de section dit « plan frontal » (P0), sensiblement perpendiculaire à l'axe longitudinal (YY') de la crémaillère (2) et contenant l'axe de poussée (ZZ'), une ligne fictive, dite « frontière de basculement » (L_{T}), qui passe par le centre (O13) de l'arc de cercle générant la surface de glissement (13) d'une part et par le centre (O20) d'une section droite de l'organe amortisseur (20) d'autre part, présente, par rapport à l'axe de poussée (ZZ'), un angle d'ouverture, dit « angle d'assise » (θ_{LT}), qui est égal ou supérieur à 20 degrés, et inférieur ou égal à 40 degrés, de préférence compris entre 20 degrés et 35 degrés, voire sensiblement égal à 35 degrés.

5. Dispositif (1) selon l'une des revendications précédentes **caractérisé en ce que** la surface de répartition (23) forme un tronc de cône centré sur l'axe de poussée (ZZ'), dont le sommet (S23) pointe dans le sens du recul axial du poussoir (10).

6. Dispositif (1) selon l'une des revendications précédentes **caractérisé en ce que** la surface de répartition (23) est inclinée par rapport à l'axe de poussée (ZZ') selon un angle d'inclinaison (θ₂₃).

7. Dispositif (1) selon la revendication 6 **caractérisé en ce que** l'angle d'inclinaison (θ₂₃) de la surface de répartition (23) par rapport à l'axe de poussée (ZZ') est compris entre 30 degré et 60 degrés, et de préférence sensiblement égal à 45 degrés, voire à 55 degrés.

8. Dispositif (1) selon l'une des revendications précédentes **caractérisé en ce que** la composante d'extension radiale (24R) et la composante d'extension axiale (24A) de la surface de siège (24) sont formées respectivement par une première portion de surface et une seconde portion de surface sécantes l'une avec l'autre, et qui se coupent de préférence sensiblement à angle droit, de sorte que la surface de siège (24) forme un épaulement.

9. Dispositif (1) selon la revendication 6 **caractérisé en ce que** la première surface d'appui (21) appartenant au poussoir (10) forme la surface de répartition (23) inclinée tandis que la seconde surface d'appui (22) appartenant au boîtier (15, 16) forme la surface de siège (24).

10. Dispositif (1) selon l'une des revendications précédentes **caractérisé en ce que** le boîtier (15, 16) comprend une chemise qui s'étend sensiblement selon l'axe de poussée (ZZ') depuis une ouverture d'accès (17) débouchant sur la crémaillère (2), et au sein de laquelle le poussoir (10) coulisse axialement, ainsi qu'une culasse, distincte de la chemise, et qui est rapportée et fixée sur ladite chemise de manière à obturer ladite chemise à l'opposé de l'ouverture d'accès (17), et **en ce que** les composantes d'extension, radiale (24R) et axiale (24A), de la surface de siège (24) sont toutes deux formées par des portions de la culasse, de préférence respectivement par la paroi de fond et par la paroi latérale d'un lamage (27) qui est creusé dans ladite culasse et centré sur l'axe de poussée (ZZ').

11. Dispositif (1) selon l'une des revendications 1 à 9, **caractérisé en ce que** le boîtier (15, 16) comprend une chemise qui s'étend sensiblement selon l'axe de poussée (ZZ') depuis une ouverture d'accès (17) débouchant sur la crémaillère (2), et au sein de laquelle le poussoir (10) coulisse axialement, ainsi qu'une culasse, distincte de la chemise, et qui est rapportée et fixée sur ladite chemise de manière à obturer ladite chemise à l'opposé de l'ouverture d'accès (17), et **en ce que** le poussoir (10) présente une structure étagée axialement qui comporte d'une part une portion de tête (10A) de forme sensiblement conjuguée à la forme de la paroi interne (15I) de la chemise en vis-à-vis de laquelle coulisse ledit poussoir, et d'autre part une portion de pied (10B) qui prolonge axialement la portion de tête (10A) et qui coopère avec un alésage de guidage (30) creusé dans la culasse de sorte à guider le poussoir (10) en translation axiale par rapport à ladite culasse.

12. Dispositif (1) selon la revendication 10, **caractérisé en ce que** le poussoir (10) présente une structure étagée axialement qui comporte d'une part une portion de tête (10A) de forme sensiblement conjuguée à la forme de la paroi interne (15I) de la chemise en vis-à-vis de laquelle coulisse ledit poussoir, et d'autre part une portion de pied (10B) qui prolonge axialement la portion de tête (10A) et qui coopère avec un alésage de guidage (30) creusé dans la culasse (16) de sorte à guider le poussoir (10) en translation axiale par rapport à ladite culasse.

13. Dispositif (1) selon la revendication 12 prise en combinaison avec la revendication 6 **caractérisé en ce que** la surface de répartition inclinée (23) forme la transition entre la portion de tête (10A) et la portion de pied (10B) du poussoir (10).

14. Dispositif (1) selon la revendication 13 **caractérisé en ce que** la surface de répartition (23) inclinée se prolonge par une gorge de dégagement (32) annulaire, creusée axialement dans la portion de tête (10A) de sorte à pouvoir accueillir au moins en partie la matière constitutive de l'organe amortisseur élastique (20) qui reflue lorsque ledit organe amortisseur (20) se déforme sous l'effet de la compression provoquée par le recul du poussoir (10).

15. Dispositif (1) selon l'une des revendications 11 à 14 **caractérisé en ce que** un jeu radial (J_{B}) entre la portion de pied (10B) du poussoir (10) et l'alésage de guidage (30) de la culasse (16) est strictement inférieur à un jeu radial (J_{A}) entre la portion de tête (10A) du poussoir (10) et la paroi interne (15I) de la chemise.

16. Dispositif (1) selon l'une des revendications 10 à 15 **caractérisé en ce que** la culasse est formée, de préférence d'un seul tenant, dans un matériau polymère.

## Patentansprüche

1. Vorrichtung (1) zur Spielbeseitigung für eine Zahnstange (2), wobei die Vorrichtung (1) einen Druckknopf (10) umfasst, der dazu bestimmt ist, eine Schubkraft (F) auf eine Zahnstange (2) auszuüben, wobei der Druckknopf (10) entlang einer Schubachse (ZZ') in einem Gehäuse (15, 16) beweglich und translationsgeführt montiert ist, das angeordnet ist, um einerseits einen axialen Anschlag, der ein Hindernis für den axialen Rückstoß des Druckknopfes (10) entlang der Schubachse (ZZ') darstellt und andererseits einen radialen Anschlag zu bilden, der ein Hindernis für die radiale Entfernung des Druckknopfes quer zur Schubachse (ZZ') darstellt, wobei die Vorrichtung (1) ebenfalls ein elastisches Stoßdämpferorgan (20) umfasst, das zwischen den Druckknopf (10) und das Gehäuse (15, 16) jeweils auf Anlage an einer ersten Anlageoberfläche (21), die dem Druckknopf (10) angehört, und einer zweiten Anlageoberfläche (22), die dem Gehäuse (15, 16) angehört, eingesetzt ist, wobei die Vorrichtung (1) **dadurch gekennzeichnet ist, dass** mindestens eine der ersten und zweiten Anlageoberfläche (21, 22), "Aufteilungsoberfläche" (21, 23) genannt, im Verhältnis zur Schubachse (ZZ') geneigt ist, und dadurch, dass die andere der ersten und zweiten Anlageoberfläche (21, 22), "Sitzoberfläche" (22, 24) genannt, gegenüber der Aufteilungsoberfläche (21, 23) und gegen das elastische Stoßdämpferorgan (20) mindestens eine radiale Erweiterungskomponente (24R) aufweist, die es der Sitzoberfläche (22, 24) ermöglicht, axial auf das Stoßdämpferorgan (20) zu wirken, und mindestens eine axiale Erweiterungskomponente (24A), die es der Sitzoberfläche (22, 24) ermöglicht, radial auf das Stoßdämpferorgan (20) zu wirken, sodass, wenn der Druckknopf (10) das elastische Stoßdämpferorgan (20) gegen das Gehäuse (15, 16) komprimiert, das elastische Stoßdämpferorgan (20) im Gegenzug eine Rückhaltekraft (R_{20/10}) auf den Druckknopf (10) ausübt, die dazu tendiert, gleichzeitig den Druckknopf (10) axial in Richtung der Zahnstange (2) und quer in Richtung der Schubachse (ZZ') zurückzuholen.

2. Vorrichtung (1) nach Anspruch 1, **dadurch gekennzeichnet, dass** das elastische Stoßdämpferorgan (20) durch einen Ring aus Elastomer gebildet ist.

3. Vorrichtung (1) nach Anspruch 2, wobei das elastische Stoßdämpferorgan (20) einen kreisförmigen Querschnitt, in der Art eines O-Ringes umfasst.

4. Vorrichtung (1) nach Anspruch 1, **dadurch gekennzeichnet, dass** die Zahnstange (2) eine Längsachse (YY') besitzt, entlang der sie im Verhältnis zum Druckknopf (10) gleitet, dadurch, dass die Zahnstange (2) im Schnitt quer zu ihrer Längsachse (YY') eine Gleitoberfläche (13) aufweist, die im Wesentlichen entlang eines Kreisbogens generiert wird, und die in gleitender Anlage auf einer entsprechenden Aufnahmeoberfläche (14), die im Druckknopf (10) vorgesehen ist, zusammenwirkt, und dadurch, dass mindestens auf einer "Frontalebene" (PO) genannten Querschnittsebene, im Wesentlichen senkrecht zu der Längsachse (YY') der Zahnstange (2), und die Schubachse (ZZ') enthaltend, eine "Schwenkgrenze" (L_{T}) genannte fiktive Linie, die einerseits durch die Mitte (013) des Kreisbogens, der die Gleitoberfläche (13) bildet, und andererseits durch die Mitte (O20) eines Querschnitts des Stoßdämpferorgans (20) verläuft, im Verhältnis zu der Schubachse (ZZ') einen "Sitzwinkel" (θLT) genannten Öffnungswinkel, der gleich oder größer als 20 Grad, und kleiner oder gleich 40 Grad ist, vorzugsweise zwischen 20 Grad und 35 Grad enthalten ist, oder gar im Wesentlichen gleich 35 Grad ist, aufweist.

5. Vorrichtung (1) nach einem der vorstehenden Ansprüche, **dadurch gekennzeichnet, dass** die Aufteilungsoberfläche (23) einen Kegelstumpf bildet, der auf der Schubachse (ZZ') zentriert ist, dessen Scheitelpunkt (S23) in die axiale Rückstoßrichtung des Druckknopfes (10) weist.

6. Vorrichtung (1) nach einem der vorstehenden Ansprüche, **dadurch gekennzeichnet, dass** die Aufteilungsoberfläche (23) im Verhältnis zur Schubachse (ZZ') entsprechend einem Neigungswinkel (023) geneigt ist.

7. Vorrichtung (1) nach Anspruch 6, **dadurch gekennzeichnet, dass** der Neigungswinkel (023) der Aufteilungsoberfläche (23) im Verhältnis zur Schubachse (ZZ') zwischen 30 Grad und 60 Grad enthalten ist, und vorzugsweise im Wesentlichen gleich 45 Grad, oder gar 55 Grad ist.

8. Vorrichtung (1) nach einem der vorstehenden Ansprüche, **dadurch gekennzeichnet, dass** die radiale Erweiterungskomponente (24R) und die axiale Erweiterungskomponente (24A) der Sitzoberfläche (24) jeweils durch einen ersten Oberflächenabschnitt und einen zweiten Oberflächenabschnitt gebildet sind, die einander schneiden, und die sich vorzugsweise im Wesentlichen im rechten Winkel schneiden, sodass die Sitzoberfläche (24) einen Ansatz bildet.

9. Vorrichtung (1) nach Anspruch 6, **dadurch gekennzeichnet, dass** die erste Anlageoberfläche (21), die dem Druckknopf (10) angehört, die geneigte Aufteilungsoberfläche (23) bildet, während die zweite Anlageoberfläche (22), die dem Gehäuse (15, 16) angehört, die Sitzoberfläche (24) bildet.

10. Vorrichtung (1) nach einem der vorstehenden Ansprüche, **dadurch gekennzeichnet, dass** das Gehäuse (15, 16) eine Hülle umfasst, die sich im Wesentlichen entlang der Schubachse (ZZ') aus einer Zugangsöffnung (17), die in die Zahnstange (2) mündet, und in der der Druckknopf (10) axial gleitet, erstreckt und einen Verschluss, der sich von der Hülle unterscheidet, und der auf der Hülle angebracht und befestigt ist, um die Hülle entgegengesetzt zur Zugangsöffnung (17) zu verschließen, und dadurch, dass die radiale (24R) und axiale (24A) Erweiterungskomponente der Sitzoberfläche (24) beide durch Abschnitte des Verschlusses, vorzugsweise jeweils durch die Bodenwand und durch die Seitenwand einer Senkung (27) gebildet werden, die in den Verschluss eingearbeitet ist, und auf der Schubachse (ZZ') zentriert ist.

11. Vorrichtung (1) nach einem der Ansprüche 1 bis 9, **dadurch gekennzeichnet, dass** das Gehäuse (15, 16) eine Hülle umfasst, die sich im Wesentlichen entlang der Schubachse (ZZ') aus einer Zugangsöffnung (17), die in die Zahnstange (2) mündet, und in der der Druckknopf (10) axial gleitet, erstreckt und ein Verschluss, der sich von der Hülle unterscheidet, und der auf der Hülle angebracht und befestigt ist, um die Hülle entgegengesetzt zur Zugangsöffnung (17) zu verschließen, und dadurch, dass der Druckknopf (10) eine axial abgestufte Struktur aufweist, die einerseits einen Kopfabschnitt (10A) in einer im Wesentlichen zur Form der Innenwand (15I) der Hülle abgestimmten Form beinhaltet, gegenüber der der Druckknopf gleitet, und andererseits einen Fußabschnitt (10B), der den Kopfabschnitt (10A) axial verlängert und der mit einer Führungsbohrung (30) zusammenwirkt, die in den Verschluss eingearbeitet ist, um den Druckknopf (10) in axialer Translation im Verhältnis zum Verschluss zu führen.

12. Vorrichtung (1) nach Anspruch 10, **dadurch gekennzeichnet, dass** der Druckknopf (10) eine axial abgestufte Struktur aufweist, die einerseits einen Kopfabschnitt (10A) in einer im Wesentlichen zur Form der Innenwand (15I) der Hülle abgestimmten Form beinhaltet, gegenüber der der Druckknopf gleitet, und andererseits einen Fußabschnitt (10B), der den Kopfabschnitt (10A) axial verlängert und der mit einer Führungsbohrung (30) zusammenwirkt, die in den Verschluss (16) eingearbeitet ist, um den Druckknopf (10) in axialer Translation im Verhältnis zum Verschluss zu führen.

13. Vorrichtung (1) nach Anspruch 12, in Verbindung mit Anspruch 6, **dadurch gekennzeichnet, dass** die geneigte Aufteilungsoberfläche (23) den Übergang zwischen dem Kopfabschnitt (10A) und dem Fußabschnitt (10B) des Druckknopfes (10) bildet.

14. Vorrichtung (1) nach Anspruch 13, **dadurch gekennzeichnet, dass** sich die geneigte Aufteilungsoberfläche (23) in einer ringförmigen Unterschneidung (32) fortsetzt, die axial in den Kopfabschnitt (10A) eingearbeitet ist, um mindestens teilweise das Material aufnehmen zu können, aus dem das elastische Stoßdämpferorgan (20) besteht, das zurückweicht, wenn sich das Stoßdämpferorgan (20) unter der Wirkung der durch den Rückstoß des Druckknopfes (10) hervorgerufenen Komprimierung verformt.

15. Vorrichtung (1) nach einem der Ansprüche 11 bis 14, **dadurch gekennzeichnet, dass** das radiale Spiel (J_{B}) zwischen dem Fußabschnitt (10B) des Druckknopfes (10) und der Führungsbohrung (30) des Verschlusses (16) grundsätzlich kleiner als ein radiales Spiel (J_{A}) zwischen dem Kopfabschnitt (10A) des Druckknopfes (10) und der Innenwand (15I) der Hülle ist.

16. Vorrichtung (1) nach einem der Ansprüche 10 bis 15, **dadurch gekennzeichnet, dass** der Verschluss vorzugsweise in einem Stück aus einem Polymermaterial gebildet wird.

## Claims

1. A clearance compensation device (1) for a rack (2), said device (1) comprising a tappet (10) intended to exert a thrust force (F) against a rack (2), said tappet (10) being movably mounted and guided in translation, according to a thrust axis (ZZ'), in a casing (15, 16) which is arranged to form, on the one hand, an axial stop which hinders the axial recoil of the tappet (10) according to the thrust axis (ZZ') and, on the other hand, a radial stop which hinders the radial distance of the tappet transversely to the thrust axis (ZZ'), said device (1) also comprising an elastic damping member (20), which is interposed between the tappet (10) and the casing (15, 16), bearing respectively against a first bearing surface (21) belonging to the tappet (10) and a second bearing surface (22) belonging to the casing (15, 16), said device being **characterized in that** at least one of said first and second bearing surfaces (21, 22), called « distribution surface » (21, 23), is inclined with respect to the thrust axis (ZZ'), and **in that** the other of said first and second bearing surfaces (21, 22), called « seat surface » (22, 24), has, facing the distribution surface (21, 23) and against the elastic damping member (20), at least one radial extension component (24R), which allows said seat surface (22, 24) to act axially on the damping member (20), and at least one axial extension component (24A), which allows said seat surface (22, 24) to act radially on the damping member (20) so that, when the tappet (10) compresses the elastic damping member (20) against the casing (15, 16), the elastic damping member (20) exerts, in response on the tappet (10), a retaining force (R_{20/10}) which tends to return simultaneously said tappet (10) axially in the direction of the rack (2) and transversely in the direction of the thrust axis (ZZ').

2. Device (1) according to claim 1, **characterized in that** the elastic damping member (20) is formed by a ring made of elastomer.

3. Device (1) according to claim 2, in which the elastic damping member (20) comprises a circular cross-section, such as an O-ring seal.

4. Device (1) according to claim 1, **characterized in that** the rack (2) has a longitudinal axis (YY'), according to which it slides relative to the tappet (10), **in that** the rack (2) has, in a section transverse to its longitudinal axis (YY'), a sliding surface (13) which is generated substantially according to an arc of circle and which cooperates in sliding support on a corresponding receiving surface (14) provided in the tappet (10), and **in that**, at least in a section plane called « frontal plane » (P0), substantially perpendicular to the longitudinal axis (YY') of the rack (2) and containing the thrust axis (ZZ'), the fictional line, called « tilt boundary » (L_{T}), which passes through the center (O₁₃) of the arc of circle generating the sliding surface (13), on the one hand, and through the center (O₂₀) of the cross-section of the damping member (20), on the other hand, has, with respect to the thrust axis (ZZ'), an opening angle, called « seat angle » (θ_{LT}), which is equal to or larger than 20 degrees, and smaller than or equal to 40 degrees, preferably comprised between 20 degrees and 35 degrees, and even substantially equal to 35 degrees.

5. Device (1) according to any of the preceding claims, **characterized in that** the distribution surface (23) forms a truncated cone centered on the thrust axis (ZZ'), whose apex (S23) points in the direction of the axial recoil of the tappet (10).

6. Device (1) according to any of the preceding claims, **characterized in that** the distribution surface (23) is tilt relative to the thrust axis (ZZ') at an angle of inclination (θ₂₃).

7. Device (1) according to claim 6, **characterized in that** the angle of inclination (θ₂₃) of the distribution surface (23) with respect to the thrust axis (ZZ') is comprised between 30 degrees and 60 degrees, and preferably substantially equal to 45 degrees, and even to 55 degrees.

8. Device (1) according to any of the preceding claims, **characterized in that** the radial extension component (24R) and the axial extension component (24A) of the seat surface (24) are formed respectively by a first surface portion and a second surface portion secant to each other, and which preferably intersect substantially at a right angle, so that the seat surface (24) forms a shoulder.

9. Device (1) according to claim 6, **characterized in that** the first bearing surface (21) belonging to the tappet (10) forms the inclined distribution surface (23) whereas the second bearing surface (22) belonging to the casing (15, 16) forms the seat surface (24).

10. Device (1) according to any of the preceding claims, **characterized in that** the casing (15, 16) comprises a jacket (15) which extends substantially according to the thrust axis (ZZ') from an access aperture (17) opening onto the rack (2), and within which the tappet (10) slides axially, as well as a yoke, distinct from the jacket, and which is added and fastened on said jacket so as to obturate said jacket opposite the access aperture (17), and **in that** the radial (24R) and axial (24A) extension components of the seat surface (24) are both formed by portions of the yoke, preferably respectively by the bottom wall and by the side wall of a counterbore (27) which is drilled in said yoke (16) and centered on the thrust axis (ZZ').

11. Device (1) according to any claims 1 to 9, **characterized in that** the casing (15, 16) comprises a jacket which extends substantially according to the thrust axis (ZZ') from an access aperture (17) opening onto the rack (2), and within which the tappet (10) slides axially, as well as a yoke, distinct from the jacket, and which is added and fastened on said jacket so as to obturate said jacket opposite the access aperture (17), and **in that** the tappet (10) has an axially-stepped structure which includes, on the one hand, a head portion (10A) with a shape substantially matching the shape of the inner wall (151) of the jacket opposite which said tappet slides and, on the other hand, a foot portion (10B) which axially prolongs the head portion (10A) and which cooperates with a guide bore (30) drilled in the yoke so as to guide the tappet (10) in axial translation relative to said yoke.

12. Device (1) according to claim 10, **characterized in that** the tappet (10) has an axially-stepped structure which includes, on the one hand, a head portion (10A) with a shape substantially matching the shape of the inner wall (151) of the jacket opposite which said tappet slides and, on the other hand, a foot portion (10B) which axially prolongs the head portion (10A) and which cooperates with a guide bore (30) drilled in the yoke (16) so as to guide the tappet (10) in axial translation relative to said yoke.

13. Device (1) according to claim 12 taken in combination with claim 6, **characterized in that** the inclined distribution surface (23) forms the transition between the head portion (10A) and the foot portion (10B) of the tappet (10).

14. Device (1) according to claim 13, **characterized in that** the inclined distribution surface (23) is prolonged by an annular disengagement groove (32), axially drilled in the head portion (10A) so as to be able to accommodate at least partially the constitutive material of the elastic damping member (20) which flows back when said damping member (20) is deformed under the effect of the compression caused by the recoil of the tappet (10).

15. Device (1) according to any of claims 11 to 14, **characterized in that** the radial clearance (J_{B}) between the foot portion (10B) of the tappet (10) and the guide bore (30) of the yoke (16) is strictly smaller than the radial clearance (J_{A}) between the head portion (10A) of the tappet (10) and the inner wall (151) of the jacket.

16. Device (1) according to any of claims 10 to 15, **characterized in that** the yoke is formed, preferably integrally, of a polymer material.
